# EUROPEAN PATENT APPLICATION

(11) **EP 2 437 112 A1**
(43) Date of publication of application: **04.04.2012**
(21) Application number: 10780384.3
(22) Date of filing: 20.04.2010
(51) Int. Cl.: G02F 1/1343

(54) **LIQUID CRYSTAL DISPLAY DEVICE**

(30) Priority: 28.05.2009 JP 2009129521; 15.01.2010 JP 2010006693
(71) Applicant: Sharp Kabushiki Kaisha, Osaka-shi, Osaka 545-8522 (JP)
(72) Inventor: OKAZAKI, Tsuyoshi, Osaka 545-8522 (JP); SAKAI, Takehiko, Osaka 545-8522 (JP); MORISHITA, Katsuhiko, Osaka 545-8522 (JP); KAWASHIMA, Shingo, Osaka 545-8522 (JP); CHIBA, Dai, Osaka 545-8522 (JP); FUJITA, Tetsuo, Osaka 545-8522 (JP)
(74) Representative: Müller - Hoffmann & Partner
(86) International application number: PCT/JP2010/057006
(87) International publication number: WO 2010/137427

(57) **Abstract**

The present invention provides a liquid crystal display device capable of reducing a white tinge phenomenon in a vertical alignment mode having at least a pair of comb-shaped electrodes. The present invention provides a liquid crystal display device including a pair of substrates disposed opposite each other, and a liquid crystal layer sandwiched between the pair of substrates, wherein one of the pair of substrates includes a pair of comb-shaped electrodes, the pair of electrodes are disposed opposite each other planarly within a pixel, the liquid crystal layer contains p-type nematic liquid crystal and is driven by an electric field generated between the pair of electrodes, the p-type nematic liquid crystal is vertically aligned relative to surfaces of the pair of substrates when no voltage is applied, and two or more regions differing from each other in an interval between the pair of electrodes are formed within the pixel.

## Description

### TECHNICAL FIELD

The present invention relates to a liquid crystal display device, and more particularly to a liquid crystal display device suitable for use in a vertical alignment mode having at least a pair of comb-shaped electrodes, such as a TBA (Transverse Bend Alignment) mode.

### BACKGROUND ART

A liquid crystal display device is a low power consumption display device that can be made lightweight and thin, and is therefore used widely in televisions, personal computer monitors, and so on.

Further, recent years have witnessed the development of a liquid crystal display device that operates in a VA (Vertical Alignment) mode having a high contrast ratio. In the VA mode, liquid crystal molecules are aligned substantially vertically relative to substrates when an inter-substrate voltage is 0 V, but when the inter-substrate voltage is sufficiently larger than a threshold voltage, the liquid crystal molecules are aligned substantially horizontally relative to the substrates.

A domain division technique in which a tilt direction of the liquid crystal molecules is divided into two or more regions within a pixel has also been developed. According to this technique, the liquid crystal molecules tilt in different directions within the pixel when a voltage is applied to a liquid crystal layer, and therefore a viewing angle characteristic of the liquid crystal display device can be improved. Note that the respective regions in which the liquid crystal molecules have different tilt directions are known as domains, and domain division is also known as multi domain.

Alignment control in a multi domain VA mode may be performed using several methods. A method of regulating the alignment of the liquid crystal using a diagonal electric field, a projection (a rib), or a slit may be cited as an example. The slit is opened in ITO (Indium Tin Oxide) serving as a transparent electrode. This type of liquid crystal display device is typically known and put to practical use as an MVA (Multi-Domain Vertical Alignment) mode, ASV (Advanced Super View) mode, or PVA (Patterned Vertical Alignment) mode device. In these modes, however, a manufacturing process is complicated, and similarly to a TN (Twisted Nematic) mode, there remains room for improvement in terms of a response time.

A liquid crystal display device in which a pixel electrode is divided into a plurality of sub-pixel electrodes and at least a part of the plurality of sub-pixel electrodes is capacitively coupled to a control electrode connected to a switching element has been disclosed as an example of an MVA mode liquid crystal display device (see Patent Document 1, for example).

Further, a liquid crystal display device in which a liquid crystal layer is provided between a pair of substrates such that when no voltage is applied, the liquid crystal molecules in the liquid crystal layer are aligned in a substantially vertical direction, including: pixels disposed in matrix form on the substrate, each having a plurality of sub-pixel electrodes; a plurality of switching elements respectively connected to the plurality of sub-pixel electrodes; a plurality of data bus lines connected to the switching elements; a plurality of gate bus lines connected to the switching elements to control the switching elements; a data bus drive circuit that supplies a drive signal to the data bus line and applies the drive signal to the sub-pixel electrode via the switching element; and alignment regulating means provided on the substrate to regulate an alignment direction of the liquid crystal molecules in a plurality of directions, wherein a first sub-pixel electrode and a second sub-pixel electrode differing in surface area are provided in a single pixel, and the data bus drive circuit applies a first drive signal to the first sub-pixel electrode to vary an input gray scale of an image signal from a low brightness to a high brightness in accordance with a gray scale increase, and applies a second drive signal having a lower brightness than the first drive signal to the second sub-pixel electrode to vary the input gray scale of the image signal from a low brightness to a high brightness in accordance with the gray scale increase, has also been disclosed (see Patent Document 2, for example).

In a conventional system (also referred to hereafter as a transverse electric field system) proposed in response to problems occurring in an MVA mode process, display is performed by sealing a liquid crystal layer between a pair of substrates, applying a driving voltage to two electrodes formed on one or both of the substrates such that the liquid crystal layer is driven by an electric field oriented in a substantially parallel direction to a substrate interface, and modulating light that enters the liquid crystal layer through a gap between the two electrodes. Conventional examples of this system include an IPS (In-Plane Switching) mode and the TBA (Transverse Bend Alignment) mode.

In both of these modes, the liquid crystal layer is driven by a transverse electric field generated by pixel electrodes connected to an active element such as a TFT and a common electrode common to the respective pixels.

A direct viewing type or projection type liquid crystal display device including: a pair of substrates; at least two display electrodes formed on one substrate of the pair of substrates and insulated from each other; and a liquid crystal material sandwiched between the pair of substrates in a state where the pair of substrates oppose each other such that the display electrodes are on an inner side, which performs display by providing a potential difference between the display electrodes to alter an alignment condition of liquid crystal molecules in the liquid crystal material, thereby controlling a rotary polarization characteristic, wherein the liquid crystal material contains liquid crystal molecules having an opposite twist direction to the twist direction of the liquid crystal molecules when the potential difference is provided between the display electrodes, has been disclosed as an example of an IPS mode liquid crystal display device (see Patent Document 3, for example).

Further, the TBA mode is a display system in which p-type nematic liquid crystal is used as the liquid crystal material and an alignment bearing of the liquid crystal molecules is prescribed by driving the liquid crystal using a transverse electric field while maintaining a high contrast obtained by vertical alignment. With this system, alignment control using projections is not required, and therefore a pixel constitution can be simplified, enabling a superior viewing angle characteristic.

Patent Document 1: Japanese Patent Application Publication 2005-292397
Patent Document 2: Japanese Patent Application Publication 2005-316211
Patent Document 3: Japanese Patent Application Publication H7-92504

Problems to be solved by the present invention and the development of the present invention will be described below using the TBA mode as an example. However, the present invention is not limited to the TBA mode.
Displays modes such as the MVA mode, PVA mode, and TBA mode are typically normally black modes in which nematic liquid crystal is vertically aligned when no voltage is applied in a cross Nicol arrangement. Further, these modes have a so-called multi-domain (in-cell self-compensating) structure in which the liquid crystal molecules tilt symmetrically about a head-on direction when a voltage is applied, thereby widening a viewing angle during voltage application. However, in these modes, a shape of a voltage-transmittance characteristic (VT characteristic) differs between the head-on direction and a diagonal direction. This problem is particularly evident at a gray scale close to black display (a low gray scale) such that at a low gray scale, the VT characteristic is greatly dependent on variation in a polar angle. More specifically, when a viewing direction is inclined from the head-on direction, a phenomenon whereby a dark display on the low gray scale side is tinged with white (appears white) occurs. Note that this phenomenon is known as white tinge. Further, this white tinge phenomenon is not perceived during black and white display. Here, black and white display means performing black and white display by adjusting a lightness of dots in a plurality of colors (typically, R (red), G (green), and B (blue) dots).

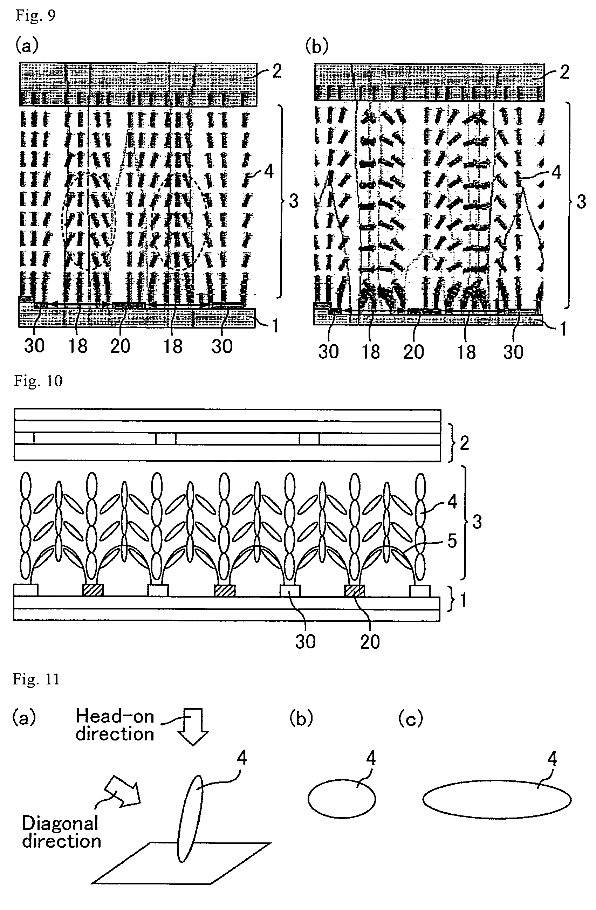

To describe white tinge in more detail, in a mode (including the TBA mode) where the nematic liquid crystal is vertical aligned when no voltage is applied, the liquid crystal molecules appear different between the head-on direction and the diagonal direction when a voltage is applied such that the liquid crystal molecules tilt. More specifically, during low gray scale display such as that shown in Fig. 11(A), a liquid crystal molecule 4 appears to be circular from the head-on direction, as shown in Fig. 11(B). When the polar angle of the viewing direction is increased, however, the liquid crystal molecule 4 is viewed in an elliptical shape (a rod shape), as shown in Fig. 11(C). When the liquid crystal molecule 4 is viewed in a circular shape, an image is displayed in black, and when the liquid crystal molecule 4 is viewed in an elliptical shape, the image becomes lighter. In other words, when the polar angle of the viewing direction is increased during low gray scale display, light leakage (white tinge) occurs.

Patent Documents 1 and 2 describe techniques for reducing white tinge in the MVA mode but do not mention the TBA mode.

Patent Document 3 describes a technique for improving coloring in the IPS mode but does not mention reducing white tinge in the TBA mode.

Further, with the technique described in Patent Document 1, the sub-pixel electrode, which exhibits a VT characteristic having a high threshold, is controlled by a floating potential, and it may therefore be difficult to withdraw a charge that has already been written to the electrode. Hence, potential variation in the pixel may decelerate, causing image sticking.

Furthermore, with the technique described in Patent Document 2, the high-brightness sub-dot and the low-brightness sub-dot are driven independently, and therefore two data bus lines and two TFTs are required for each dot. Accordingly, an opening portion of the dot decreases. Moreover, the number of data bus lines is double that of a normal display system, and therefore source drivers are also complicated.

### DISCLOSURE OF THE INVENTION

The present invention has been designed in consideration of the current circumstances described above, and an object thereof is to provide a liquid crystal display device capable of reducing a white tinge phenomenon in a vertical alignment mode having at least a pair of comb-shaped electrodes.

Following varied investigations into liquid crystal display devices capable of reducing a white tinge phenomenon in a vertical alignment mode having at least a pair of comb-shaped electrodes, such as a TBA mode, the inventors of the present invention focused on an interval (an electrode interval S) between the pair of comb-shaped electrodes. The inventors discovered that by providing two or more regions having different electrode intervals S within a pixel, the thresholds of the VT characteristic in the two regions can be made different such that at a low gray scale in particular, a tilt of the VT characteristic is made more gentle, and as a result, variation in the VT characteristic corresponding to the size of the polar angle of the viewing direction can be reduced, especially on the low gray scale side. Thus, the inventors solved the problems described above in an excellent manner and thereby arrived at the present invention.

More specifically, the present invention provides a liquid crystal display device including a pair of substrates disposed opposite each other, and a liquid crystal layer sandwiched between the pair of substrates, wherein one of the pair of substrates includes a pair of comb-shaped electrodes, the pair of electrodes are disposed opposite each other planarly within a pixel, the liquid crystal layer contains p-type nematic liquid crystal and is driven by an electric field generated between the pair of electrodes, the p-type nematic liquid crystal is vertically aligned relative to surfaces of the pair of substrates when no voltage is applied, and two or more regions differing from each other in an interval between the pair of electrodes are formed within the pixel.

Note that in the "vertical alignment" described above, a pre-tilt angle does not have to be set precisely at 90°, and therefore the p-type nematic liquid crystal may be aligned to an extent that allows the liquid crystal display device according to the present invention to function as a TBA mode liquid crystal display device when no voltage is applied.

The configuration of the liquid crystal display device of the present invention is not especially limited as long as it essentially includes such components.
Preferable embodiments of the liquid crystal display device of the present invention are mentioned in more detail below.

The liquid crystal display device preferably includes two regions differing from each other in the interval, and when a surface area of a region, of the two regions, in which the interval is narrower is set as Aₙ, and a surface area of a region, of the two regions, in which the interval is wider is set as A_{w}, the liquid crystal display device preferably satisfies Aₙ ≤ A_{w}. Thus, the perception of white tinge can be suppressed more effectively during low gray scale display. Moreover, an improvement in transmittance can be achieved.

The liquid crystal display device preferably satisfies Aₙ : A_{w} = 1 : 1 to 1 : 3. When a proportion of A_{w} exceeds Aₙ : A_{w} = 1 : 3, it may be impossible to effectively suppress white tinge favorably.

The liquid crystal display device more preferably satisfies Aₙ : A_{w} = 1 : 1.5 to 1 : 3. Thus, a superior white tinge suppression effect to that of a current MVA mode television can be obtained.

The liquid crystal display device particularly preferably substantially satisfies Aₙ : A_{w} = 1 : 2. Thus, an allowable range of a combination of the narrow interval and the wide interval can be maximized.

It was found as a result of a simulation that when Aₙ : A_{w} = 1 : 2, a substantially identical white tinge suppression effect to that of cases in which Aₙ : A_{w} = 1 : 2.5 and Aₙ : A_{w} = 1 : 3 was obtained. Therefore, substantially satisfying Aₙ : A_{w} = 1 : 2 more specifically means preferably satisfying Aₙ : A_{w} = 1 : 2 to 1 : 3 and particularly preferably satisfying Aₙ : A_{w} = 1 : 2 to 1 : 2.5.

The liquid crystal display device according to the present invention may be a color liquid crystal display device, and the pixel may be a dot (a sub-pixel).

### EFFECT OF THE INVENTION

With the liquid crystal display device according to the present invention, a white tinge phenomenon can be reduced in a vertical alignment mode having at least a pair of comb-shaped electrodes.

### BRIEF DESCRIPTION OF THE DRAWINGS

Fig. 1 is a pattern diagram showing a liquid crystal display device according to a first embodiment, wherein Fig. 1(A) is a sectional view, Fig. 1(B) is a plan view, and Fig. 1(C) is a view showing an arrangement relationship between absorption axes of a pair of linear polarization plates when a display surface is seen from above;
Fig. 2 is a sectional pattern diagram showing the liquid crystal display device according to the first embodiment during voltage application;
Fig. 3 is a view showing an electric line of force and a liquid crystal director determined in a simulation when the liquid crystal display device according to the first embodiment is seen from a cross-sectional direction, wherein Fig. 3(A) shows a condition (a low gray scale display condition) when 2.5 V are applied between a pixel electrode and a common electrode and Fig. 3(B) shows a condition (a white display condition) when 6.5V are applied between the pixel electrode and the common electrode;
Fig. 4 is a pattern diagram showing a liquid crystal molecule in the liquid crystal display device according to the first embodiment, wherein Fig. 4(A) is a perspective view, Fig. 4(B) is a view seen from a head-on direction, and Fig. 4(C) is a view seen from a diagonal direction;
Fig. 5 is a pattern diagram showing a VT characteristic of the liquid crystal display device according to the first embodiment;
Fig. 6 is a pattern diagram showing the VT characteristic of the liquid crystal display device according to the first embodiment;
Fig. 7 is a view showing an equivalent circuit in a dot portion of the liquid crystal display device according to the first embodiment;
Fig. 8 is a pattern diagram showing a liquid crystal display device according to a first comparative embodiment, wherein Fig. 8(A) is a sectional view and Fig. 8(B) is a plan view;
Fig. 9 is a view showing an electric line of force and a liquid crystal director determined in a simulation when the liquid crystal display device according to the first comparative embodiment is seen from a cross-sectional direction, wherein Fig. 9(A) shows a condition (a low gray scale display condition) when 2.5 V are applied between a pixel electrode and a common electrode and Fig. 9(B) shows a condition (a white display condition) when 6.5V are applied between the pixel electrode and the common electrode;
Fig. 10 is a sectional pattern diagram showing the liquid crystal display device according to the first comparative embodiment during voltage application;
Fig. 11 is a pattern diagram showing a liquid crystal molecule in the liquid crystal display device according to the first comparative embodiment, wherein Fig. 11(A) is a perspective view, Fig. 11(B) is a view seen from the head-on direction, and Fig. 11(C) is a view seen from the diagonal direction;
Fig. 12 is a pattern diagram showing the VT characteristic of the liquid crystal display device according to the first comparative embodiment;
Fig. 13 is a pattern diagram showing the VT characteristic of the liquid crystal display device according to the first comparative embodiment;
Fig. 14 is a planar pattern diagram showing a constitution of a dot used in a simulation (a three-dimensional simulation) ;
Fig. 15 is a graph showing the VT characteristic of the liquid crystal display device according to the first embodiment;
Fig. 16 is a graph showing the VT characteristic of the liquid crystal display device according to the first comparative embodiment;
Fig. 17 is a view showing a white tinge characteristic of the liquid crystal display device according to the first embodiment;
Fig. 18 is a view showing the white tinge characteristic of the liquid crystal display device according to the first comparative embodiment;
Fig. 19 is a view showing the white tinge characteristic of the liquid crystal display device according to the first embodiment in a case where an electrode width L = 2.5 µm and a surface area Aₙ of a narrow interval region : a surface area A_{w} of a wide interval region =1:1, wherein Fig. 19(A) shows a case where an electrode interval S = 3 µm or 8 µm, Fig. 19(B) shows a case where S = 4 µm or 8 µm, and Fig. 19(C) shows a case where S = 5 µm or 8 µm;
Fig. 20 is a view showing the white tinge characteristic of the liquid crystal display device according to the first embodiment in a case where L = 2.5 µm and Aₙ : A_{w} = 1 : 1, wherein Fig. 20(A) shows a case where S = 3 µm or 10 µm, Fig. 20(B) shows a case where S = 4 µm or 10 µm, and Fig. 20(C) shows a case where S = 5 µm or 10 µm;
Fig. 21 is a view showing the white tinge characteristic of the liquid crystal display device according to the first embodiment in a case where L = 2.5 µm and Aₙ : A_{w} = 1 : 1, wherein Fig. 21(A) shows a case where S = 3 µm or 12 µm, Fig. 21(B) shows a case where S = 4 µm or 12 µm, and Fig. 21(C) shows a case where S = 5 µm or 12 µm;
Fig. 22 is a view showing the white tinge characteristic of the liquid crystal display device according to the first embodiment in a case where L = 2.5 µm and Aₙ : A_{w} = 1 : 1.5, wherein Fig. 22(A) shows a case where S = 3 µm or 8 µm, Fig. 22(B) shows a case where S = 4 µm or 8 µm, and Fig. 22(C) shows a case where S = 5 µm or 8 µm;
Fig. 23 is a view showing the white tinge characteristic of the liquid crystal display device according to the first embodiment in a case where L = 2.5 µm and Aₙ : A_{w} = 1 : 1.5, wherein Fig. 23(A) shows a case where S = 3 µm or 10 µm, Fig. 23(B) shows a case where S = 4 µm or 10 µm, and Fig. 23(C) shows a case where S = 5 µm or 10 µm;
Fig. 24 is a view showing the white tinge characteristic of the liquid crystal display device according to the first embodiment in a case where L = 2.5 µm and Aₙ : A_{w} = 1 : 1.5, wherein Fig. 24(A) shows a case where S = 3 µm or 12 µm, Fig. 24(B) shows a case where S = 4 µm or 12 µm, and Fig. 24(C) shows a case where S = 5 µm or 12 µm;
Fig. 25 is a view showing the white tinge characteristic of the liquid crystal display device according to the first embodiment in a case where L = 2.5 µm and Aₙ : A_{w} = 1 : 2, wherein Fig. 25(A) shows a case where S = 3 µm or 8 µm, Fig. 25(B) shows a case where S = 4 µm or 8 µm, and Fig. 25(C) shows a case where S = 5 µm or 8 µm;
Fig. 26 is a view showing the white tinge characteristic of the liquid crystal display device according to the first embodiment in a case where L = 2.5 µm and Aₙ : A_{w} = 1 : 2, wherein Fig. 26(A) shows a case where S = 3 µm or 10 µm, Fig. 26(B) shows a case where S = 4 µm or 10 µm, and Fig. 26(C) shows a case where S = 5 µm or 10 µm;
Fig. 27 is a view showing the white tinge characteristic of the liquid crystal display device according to the first embodiment in a case where L = 2.5 µm and Aₙ : A_{w} = 1 : 2, wherein Fig. 27(A) shows a case where S = 3 µm or 12 µm, Fig. 27(B) shows a case where S = 4 µm or 12 µm, and Fig. 27(C) shows a case where S = 5 µm or 12 µm;
Fig. 28 is a view showing the white tinge characteristic of the liquid crystal display device according to the first embodiment in a case where L = 2.5 µm and Aₙ : A_{w} = 1 : 2.5, wherein Fig. 28(A) shows a case where S = 3 µm or 8 µm, Fig. 28(B) shows a case where S = 4 µm or 8 µm, and Fig. 28(C) shows a case where S = 5 µm or 8 µm;
Fig. 29 is a view showing the white tinge characteristic of the liquid crystal display device according to the first embodiment in a case where L = 2.5 µm and Aₙ : A_{w} = 1 : 2.5, wherein Fig. 29(A) shows a case where S = 3 µm or 10 µm, Fig. 29(B) shows a case where S = 4 µm or 10 µm, and Fig. 29(C) shows a case where S = 5 µm or 10 µm;
Fig. 30 is a view showing the white tinge characteristic of the liquid crystal display device according to the first embodiment in a case where L = 2.5 µm and Aₙ : A_{w} = 1 : 2.5, wherein Fig. 30(A) shows a case where S = 3 µm or 12 µm, Fig. 30(B) shows a case where S = 4 µm or 12 µm, and Fig. 30(C) shows a case where S = 5 µm or 12 µm;
Fig. 31 is a view showing the white tinge characteristic of the liquid crystal display device according to the first embodiment in a case where L = 2.5 µm and Aₙ : A_{w} = 1 : 3, wherein Fig. 31(A) shows a case where S = 3 µm or 8 µm, Fig. 31(B) shows a case where S = 4 µm or 8 µm, and Fig. 31(C) shows a case where S = 5 µm or 8 µm;
Fig. 32 is a view showing the white tinge characteristic of the liquid crystal display device according to the first embodiment in a case where L = 2.5 µm and Aₙ : A_{w} = 1 : 3, wherein Fig. 32(A) shows a case where S = 3 µm or 10 µm, Fig. 32(B) shows a case where S = 4 µm or 10 µm, and Fig. 32(C) shows a case where S = 5 µm or 10 µm;
Fig. 33 is a view showing the white tinge characteristic of the liquid crystal display device according to the first embodiment in a case where L = 2.5 µm and Aₙ : A_{w} = 1 : 3, wherein Fig. 33(A) shows a case where S = 3 µm or 12 µm, Fig. 33(B) shows a case where S = 4 µm or 12 µm, and Fig. 33(C) shows a case where S = 5 µm or 12 µm;
Fig. 34 is a view showing the white tinge characteristic of a commercially available MVA mode television;
Fig. 35 is a view showing the white tinge characteristic of the liquid crystal display device according to the first embodiment in a case where L = 3 µm and Aₙ : A_{w} = 1 : 1, wherein Fig. 35(A) shows a case where S = 3 µm or 8 µm, Fig. 35(B) shows a case where S = 4 µm or 8 µm, and Fig. 35(C) shows a case where S = 5 µm or 8 µm;
Fig. 36 is a view showing the white tinge characteristic of the liquid crystal display device according to the first embodiment in a case where L = 3 µm and Aₙ : A_{w} = 1 : 1, wherein Fig. 36(A) shows a case where S = 3 µm or 10 µm, Fig. 36(B) shows a case where S = 4 µm or 10 µm, and Fig. 36(C) shows a case where S = 5 µm or 10 µm;
Fig. 37 is a view showing the white tinge characteristic of the liquid crystal display device according to the first embodiment in a case where L = 3 µm and Aₙ : A_{w} = 1 : 1, wherein Fig. 37(A) shows a case where S = 3 µm or 12 µm, Fig. 37(B) shows a case where S = 4 µm or 12 µm, and Fig. 37(C) shows a case where S = 5 µm or 12 µm;
Fig. 38 is a view showing the white tinge characteristic of the liquid crystal display device according to the first embodiment in a case where L = 3 µm and Aₙ : A_{w} = 1 : 2, wherein Fig. 38(A) shows a case where S = 3 µm or 8 µm, Fig. 38(B) shows a case where S = 4 µm or 8 µm, and Fig. 38(C) shows a case where S = 5 µm or 8 µm;
Fig. 39 is a view showing the white tinge characteristic of the liquid crystal display device according to the first embodiment in a case where L = 3 µm and Aₙ : A_{w} = 1 : 2, wherein Fig. 39(A) shows a case where S = 3 µm or 10 µm, Fig. 39(B) shows a case where S = 4 µm or 10 µm, and Fig. 39(C) shows a case where S = 5 µm or 10 µm;
Fig. 40 is a view showing the white tinge characteristic of the liquid crystal display device according to the first embodiment in a case where L = 3 µm and Aₙ : A_{w} = 1 : 2, wherein Fig. 40(A) shows a case where S = 3 µm or 12 µm, Fig. 40(B) shows a case where S = 4 µm or 12 µm, and Fig. 40(C) shows a case where S = 5 µm or 12 µm;
Fig. 41 is a view showing the white tinge characteristic of the liquid crystal display device according to the first embodiment in a case where L = 3 µm and Aₙ : A_{w} = 1 : 3, wherein Fig. 41(A) shows a case where S = 3 µm or 8 µm, Fig. 41(B) shows a case where S = 4 µm or 8 µm, and Fig. 41(C) shows a case where S = 5 µm or 8 µm;
Fig. 42 is a view showing the white tinge characteristic of the liquid crystal display device according to the first embodiment in a case where L = 3 µm and Aₙ : A_{w} = 1 : 3, wherein Fig. 42(A) shows a case where S = 3 µm or 10 µm, Fig. 42(B) shows a case where S = 4 µm or 10 µm, and Fig. 42(C) shows a case where S = 5 µm or 10 µm;
Fig. 43 is a view showing the white tinge characteristic of the liquid crystal display device according to the first embodiment in a case where L = 3 µm and Aₙ : A_{w} = 1 : 3, wherein Fig. 43(A) shows a case where S = 3 µm or 12 µm, Fig. 43(B) shows a case where S = 4 µm or 12 µm, and Fig. 43(C) shows a case where S = 5 µm or 12 µm;
Fig. 44 is a view showing the white tinge characteristic of the liquid crystal display device according to the first comparative embodiment;
Fig. 45 is a planar pattern diagram showing the liquid crystal display device according to the first embodiment;
Fig. 46 is a planar pattern diagram showing the liquid crystal display device according to the first embodiment;
Fig. 47 is a planar pattern diagram showing the liquid crystal display device according to the first embodiment;
Fig. 48 is a planar pattern diagram showing the liquid crystal display device according to the first embodiment;
Fig. 49 is a view showing the white tinge characteristic of the liquid crystal display device (test model) according to the first embodiment;
Fig. 50 is a planar pattern diagram showing the liquid crystal display device according to the first embodiment;
Fig. 51 is a planar pattern diagram showing the liquid crystal display device according to the first embodiment;
Fig. 52 is a planar pattern diagram showing the liquid crystal display device according to the first embodiment;
Fig. 53 is a planar pattern diagram showing a liquid crystal display device according to a second comparative embodiment;
Fig. 54 is a planar pattern diagram showing the liquid crystal display device according to the second comparative embodiment;
Fig. 55 is a planar pattern diagram showing the liquid crystal display device according to the second comparative embodiment;
Fig. 56 is a view showing the white tinge characteristic of the liquid crystal display device (test model) according to the first embodiment;
Fig. 57 is a sectional pattern diagram showing the constitution of a liquid crystal display device according to a second embodiment; and
Fig. 58 is a planar pattern diagram showing the constitution of the liquid crystal display device according to the first or second embodiment.

### MODES FOR CARRYING OUT THE INVENTION

The present invention will be mentioned in more detail referring to the drawings in the following embodiments, but is not limited to these embodiments.

Note that in each of the following embodiments, a 3 o'clock direction, a 12 o'clock direction, a 9 o'clock direction, and a 6 o'clock direction when a liquid crystal display panel (a pair of substrate surfaces) is seen head-on will be referred to as a 0° direction (bearing), a 90° direction (bearing), a 180° direction (bearing), and a 270° direction (bearing), respectively. Further, a direction passing through 3 o'clock and 9 o'clock will be referred to as a left-right direction, and a direction passing through 12 o'clock and 6 o'clock will be referred to as an up-down direction.

Furthermore, a head-on direction indicates a normal direction relative to a display surface of the liquid crystal display panel.

Further, a polar angle indicates an angle measured from the normal direction relative to the display surface of the liquid crystal display panel.

Furthermore, a diagonal direction indicates a direction having a polar angle that exceeds 0°.

### (First Embodiment)

A liquid crystal display device according to this embodiment is a transmission type liquid crystal display device employing a system known as a TBA system (a TBA mode), which is a type of transverse electric field system, and performs image display by causing an electric field (a transverse electric field) to act on a liquid crystal layer in a substrate surface direction (a parallel direction to a substrate surface) so as to control an alignment of the liquid crystal.

Note that in most of the following drawings, a single dot is illustrated, but a plurality of dots (sub-pixels) are provided in the form of a matrix in a display area (an image display region) of the liquid crystal display device according to this embodiment.

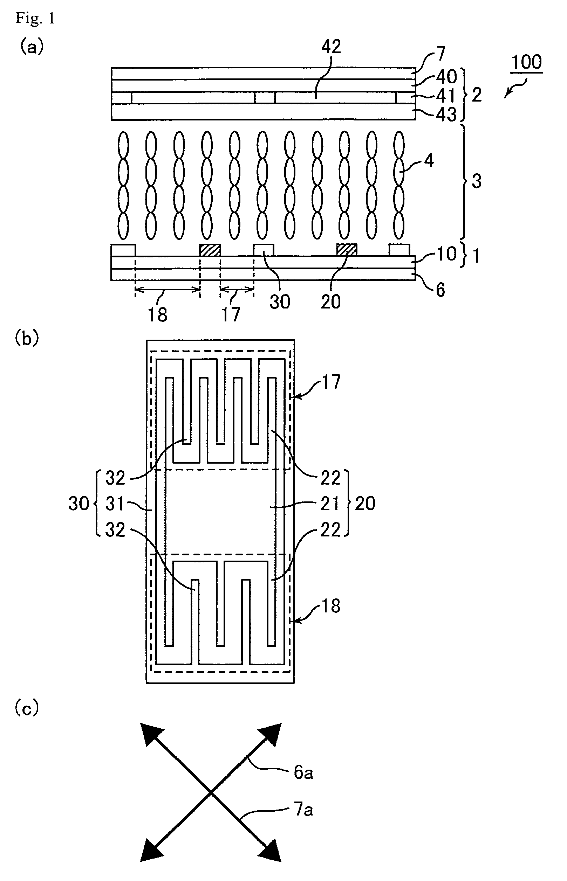

As shown in Fig. 1(A), the liquid crystal display device according to this embodiment includes a liquid crystal display panel 100, and the liquid crystal display panel 100 includes an active matrix substrate (an array substrate) 1 and an opposed substrate 2, which form a pair of substrates disposed opposite each other, and a liquid crystal layer 3 sandwiched between the pair of substrates.

A pair of linear polarization plates 6, 7 are provided on respective outer main surfaces (on an opposite side to the liquid crystal layer 3) of the array substrate 1 and the opposed substrate 2. As shown in Fig. 1(C), an absorption axis 6a of the linear polarization plate 6 on the array substrate 1 side is disposed in a 45° direction and an absorption axis 7a of the linear polarization plate 7 on the opposed substrate 2 side is disposed in a 135° direction. Hence, the two linear polarization plates 6, 7 are disposed in a cross Nicol arrangement. Further, the two absorption axes 6a, 7a form angles of 45° relative to an extension direction of a branch portion 22 of a pixel electrode 20 and a branch portion 32 of a common electrode 30, to be described below.

The array substrate 1 and the opposed substrate 2 are adhered to each other using a sealing agent provided to surround the display area via a spacer made of plastic beads or the like. The liquid crystal layer 3 is formed by sealing a liquid crystal material serving as a display medium that constitutes an optical modulation layer into a gap between the array substrate 1 and the opposed substrate 2.

The liquid crystal layer 3 includes a nematic liquid crystal material (a p-type nematic liquid crystal material) having positive dielectric anisotropy. When a voltage is not applied (when an electric field is not generated between the pixel electrode 20 and the common electrode 30, to be described below), a liquid crystal molecule 4 of the p-type nematic liquid crystal material exhibits a homeotropic alignment due to an alignment regulating force of a vertical alignment layer provided on the liquid crystal layer 3 side surfaces of the array substrate 1 and the opposed substrate 2. More specifically, when no voltage is applied, a major axis of the liquid crystal molecule 4 forms an angle of at least 88° (more preferably at least 89°) relative to the array substrate 1 and the opposed substrate 2, respectively.

A panel retardation dΔn (a product of a cell gap d and a birefringence Δn of the liquid crystal material) is preferably between 275 and 460 nm and more preferably between 280 and 400 nm. Thus, in relation to the mode, a lower limit of dΔn is preferably no less than a half wavelength of green of 550 nm, and an upper limit of dΔn is preferably within a range that can be compensated by normal direction retardation Rth of a negative C plate (a single layer). The negative C plate is provided to compensate for white tinge occurring when the liquid crystal display device is viewed from a diagonal direction during black display. Rth may be earned by laminating negative C plates, but this method leads to an increase in cost and is therefore not preferable.

A dielectric constant Δε of the liquid crystal material is preferably between 10 and 25 and more preferably between 15 and 25. A white voltage (a voltage during white display) is high, and therefore a lower limit of Δε is preferably at least approximately 10 (more preferably 15). Further, an applied voltage can be steadily reduced as Δε increases, and therefore Δε is preferably as large as possible. At present, however, assuming that a widely available material is used, the upper limit of Δε is preferably no higher than 25, as noted above.

The opposed substrate 2 is formed by disposing a black matrix (BM) layer 41 that performs light shielding between respective dots, a plurality of color layers (color filters) 42 provided for each dot, and an overcoat layer 43 covering the BM layer 41 and color layers 42 on one (the liquid crystal layer 3 side) main surface of a colorless transparent insulating substrate 40, and providing the vertical alignment layer on a liquid crystal layer 3 side surface to cover these constitutions. The BM layer 41 is formed from an opaque metal such as Cr, or an opaque organic film such as acrylic resin containing carbon, and disposed in boundaries between adjacent dots. The color layers 42, meanwhile, are used to perform color display, and are formed mainly in the dot region from a transparent organic film or the like made of pigmented acrylic resin or the like. The overcoat layer 43 is formed from thermosetting acrylic resin, photo-setting acrylic resin, or the like. Effects of the present invention are not affected when the overcoat layer 43 is omitted, but the overcoat layer 43 is preferably provided to prevent impurities from separating from the BM layer 41 and color layers 42 and to make the dielectric constant of the opposed substrate 2 uniform.

Hence, the liquid crystal display device according to this embodiment is a color liquid crystal display device (a color display active matrix type liquid crystal display device) in which the color layers 42 are provided on the opposed substrate 2, and therefore a single pixel is constituted by three dots that output light in respective colors R (red), G (green), and B (blue). Note that the type and number of colors of the dots constituting the pixel may be set appropriately and are not especially limited. In other words, in the liquid crystal display device according to this embodiment, each pixel may be constituted by dots in three colors cyan, magenta, and yellow, for example, or by dots in four or more colors.

The array substrate (TFT array substrate) 1, meanwhile, is formed by disposing a gate bus line, a Cs bus line, a source bus line, a TFT serving as a switching element provided for each dot, a drain wiring (a drain) connected to each TFT, the pixel electrode 20 provided individually for each dot, and the common electrode 30 provided in common for the respective dots on one (the liquid crystal layer 3 side) main surface of a colorless transparent insulating substrate 10, and providing the vertical alignment layer on a liquid crystal layer 3 side surface to cover these constitutions.

The vertical alignment layers provided on the array substrate 1 and the opposed substrate 2 are formed by applying a well known alignment layer material such as polyimide. The vertical alignment layer is not typically subjected to rubbing treatment but is capable of aligning liquid crystal molecules substantially vertically relative to a layer surface when no voltage is applied.

On the liquid crystal layer 3 side of the array substrate 1, as shown in Fig. 1(B), the pixel electrode 20 is provided for each dot and the continuously formed common electrode 30 is provided for all adjacent dots.

An image signal (a video signal) is supplied to the pixel electrode 20 from the source bus line (width 5 µm, for example) via a thin film transistor (TFT) serving as the switching element. The source bus line extends in the up-down direction between adjacent dots. Accordingly, a rectangular wave is applied to the pixel electrode 20 in accordance with the image signal. Each pixel electrode 20 is electrically connected to the drain wiring of the TFT via a contact hole provided in an interlayer dielectric. Further, a common signal common to the respective dots is supplied to the common electrode 30. Furthermore, the common electrode 30 is connected to a common voltage generating circuit via the Cs bus line and set at a predetermined potential (representatively 0 V).

Note that the source bus line is connected to a source driver (a data line drive circuit). Further, the gate bus line (width 5 µm, for example) extends in the left-right direction between adjacent dots. The gate bus line is connected to a gate driver (a scanning line drive circuit) outside of the display region and connected to a gate of the TFT in the display region. A pulse-form scanning signal is supplied to the gate bus line from the gate driver at a predetermined timing, and the scanning signal is applied to each TFT in line sequence. The image signal supplied from the source bus line is then applied at a predetermined timing to the pixel electrode 20 connected to the TFT that is switched ON for a fixed period following input of the scanning signal. As a result, the image signal is written to the liquid crystal layer 3.

Further, the image signal written to the liquid crystal layer 3 at a predetermined level is held for a fixed period between the pixel electrode 20 to which the image signal is applied and the common electrode 30 opposing the pixel electrode 20. In other words, a capacitor (a liquid crystal capacitor) is formed between the electrodes 20 and 30 for the fixed period. To prevent the held image signal from leaking, a holding capacitor is formed parallel to the liquid crystal capacitor. The holding capacitor is formed in each dot between the drain wiring of the TFT and the Cs bus line (a capacitor holding wiring, width 5 µm, for example) provided parallel to the gate bus line.

The pixel electrode (an electrode corresponding to one of the aforementioned pair of comb-shaped electrodes) 20 is formed from a transparent conductive film made of ITO or the like, a metal film made of aluminum, chrome, or the like, or similar. The pixel electrode 20 takes a comb shape when the liquid crystal display panel 100 is seen from above. More specifically, the pixel electrode 20 includes a trunk portion 21 having a rectangular shape when seen from above, which is provided in a center of the dot region, and a plurality of branch portions (comb teeth) 22 having a linear shape when seen from above, which are connected to the trunk portion 21 and provided in the 90° or 270° direction, whereby the dot region is bisected vertically.

The common electrode (an electrode corresponding to the other of the aforementioned pair of comb-shaped electrodes) 30 is likewise formed from a transparent conductive film made of ITO or the like, a metal film made of aluminum or the like, or similar, and takes a comb shape in the respective dots when seen from above. More specifically, the common electrode 30 includes a lattice-shaped trunk portion 31 disposed in the up-down and left-right directions so as to overlap the gate bus line and source bus line when seen from above, and a plurality of branch portions (comb teeth) 32 having a linear shape when seen from above, which are connected to the trunk portion 31 and provided in the 270° or 90° direction.

The trunk portion 31 of the common electrode 30 has a greater width than the gate bus line and source bus line. Specifically, the width of the trunk portion 31 is set to be approximately 2 µm wider than the width of the gate bus line and the source bus line, for example.

Hence, the branch portions 22 of the pixel electrode 20 and the branch portions 32 of the common electrode 30 have mutually complementary planar shapes and are disposed alternately at fixed intervals. In other words, the branch portions 22 of the pixel electrode 20 and the branch portions 32 of the common electrode 30 are disposed to face each other in parallel in an identical plane. To put it another way, the comb-shaped pixel electrode 20 and the comb-shaped common electrode 30 are disposed opposite each other in a direction for intermeshing the comb teeth. Accordingly, a transverse electric field can be formed at a high density between the pixel electrode 20 and the common electrode 30, and as a result, the liquid crystal layer 3 can be controlled with a high degree of precision. Further, the pixel electrode 20 and the common electrode 30 are shaped symmetrically about a left-right direction center line passing through the center of the dot.

As will be described below, two domains having director directions that differ from each other by 180° are formed in a gap between the pixel electrode 20 and the common electrode 30.

A width (a length in a widthwise direction) of the branch portions 22 of the pixel electrode 20 and a width (a length in a widthwise direction) of the branch portions 32 of the common electrode 30 are substantially identical. To increase transmittance, the width of the pixel electrode 20 and the common electrode 30 (the width of the branch portions 22 of the pixel electrode 20 and the branch portions 32 of the common electrode 30) is preferably as narrow as possible, and therefore, in accordance with current process rules, the width is preferably set at approximately 1 to 5 µm (more preferably between 1.5 and 4 µm). Hereafter, the width of the branch portions 22, 32 will also be referred to simply as an electrode width L.

An interval between the pixel electrode 20 and the common electrode 30 (more specifically, an interval between the pixel electrode 20 and the common electrode 30 (typically the branch portions 22 and the branch portions 32) in an orthogonal direction to an extension direction of the branch portions 22 and the branch portions 32; also referred to hereafter simply as an "electrode interval") S is not especially limited but is preferably set between 1 and 20 µm (more preferably between 2 and 12 µm). When the electrode interval S exceeds 20 µm, a response time increases dramatically and a VT characteristic may shift greatly to a high voltage side so as to exceed a driver voltage range. When the electrode interval S is smaller than 1 µm, on the other hand, it may be impossible to form the electrode using a photolithography method.

The liquid crystal display device according to this embodiment includes two or more regions having different electrode intervals S in each dot. More specifically, a region 17 in which the electrode interval S is relatively narrow (also referred to hereafter as a "narrow interval region") and a region 18 in which the electrode interval S is relatively wide (also referred to hereafter as a "wide interval region") are formed in each dot.

The electrode interval S in the narrow interval region 17 is preferably between 1 and 6 µm (more preferably between 2 and 5 µm). As will be described below, when the electrode interval S exceeds 6 µm, a gradient of a VT characteristic (VTₜₒₜₐₗ) at a low gray scale may not become gentle. When the electrode interval S is smaller than 1 µm, on the other hand, leak failures occur frequently between the pixel electrode 20 and the common electrode 30, and as a result, a yield may decrease.

The electrode interval S in the wide interval region 18 is preferably between 6 and 14 µm (more preferably between 8 and 12 µm). When the electrode interval S exceeds 14 µm, the response time increases greatly even when a low viscosity liquid crystal material is used, and as a result, a display performance may deteriorate. When the electrode interval S is smaller than 6 µm, on the other hand, a region in which the liquid crystal molecules operate becomes smaller, leading to a dramatic reduction in transmittance, and as a result, the display performance may deteriorate.

Note that Fig. 1(B) shows a case in which a ratio between a surface area Aₙ of the narrow interval region 17 and a surface area A_{w} of the wide interval region 18 is set at substantially 1 _{:} 1.

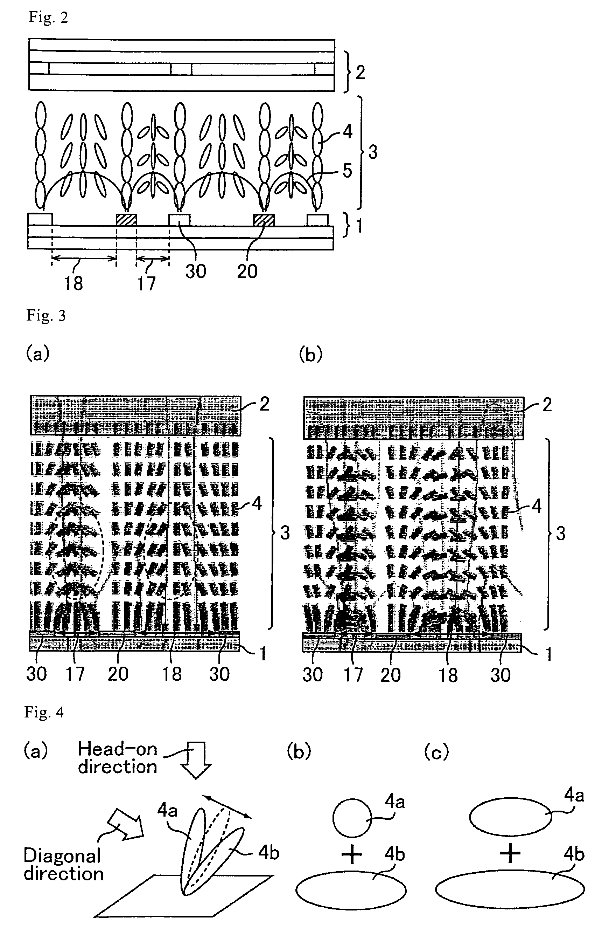

As shown in Fig. 2, the liquid crystal display device according to this embodiment performs image display by applying an image signal (a voltage) to the pixel electrode 20 via the TFT to generate an electric field (a transverse electric field 5) in a substrate (the array substrate 1 and the opposed substrate 2) surface direction between the pixel electrode 20 and the common electrode 30, and varying the transmittance of each dot by driving the liquid crystal layer 3 using the electric field 5.

More specifically, the liquid crystal display device according to this embodiment varies a retardation of the liquid crystal layer 3 using distortion in an array of the liquid crystal molecules 4, which is generated when an electric field is applied such that an electric field intensity distribution is formed in the liquid crystal layer 3. Even more specifically, an initial alignment condition of the liquid crystal layer 3 is a homeotropic alignment, but when a voltage is applied to the comb-shaped pixel electrode 20 and common electrode 30 such that the transverse electric field 5 is generated in the liquid crystal layer 3, a bend-shaped electric field is formed. As a result, two domains having director directions that differ from each other by 180° are formed between the two electrodes 20, 30. Further, in each domain (between the electrodes), the liquid crystal molecules 4 of the nematic liquid crystal material exhibit a bend-shaped liquid crystal alignment (a bend alignment).

Note that in a region where the two domains are adjacent (typically on a center line of the gap between the pixel electrode 20 and the common electrode 30), the liquid crystal molecules 4 are aligned vertically at all times, regardless of a value of the applied voltage. Therefore, in this region (a boundary), a dark line is generated at all times, regardless of the value of the applied voltage.

Fig. 3 shows results obtained by calculating the behavior of the liquid crystal according to this embodiment during voltage application in a simulation. Conditions employed during the simulation of Fig. 3 are as shown below.
- L/S in narrow interval region 17 = 2.5 µm / 3.0 µm (i.e. L = 2.5 µm, S = 3.0 µm)
- L/S in wide interval region 18 = 2.5 µm / 8.0 µm (i.e. L = 2.5 µm, S = 8.0 µm)
- dΔn: 350 nm
- Δε: 20
- γ1 (rotational viscosity of liquid crystal): 200
- negative C plate single layer (in-plane direction retardation Re: 0 nm, normal direction retardation Rth: 270 nm) disposed as optical compensation plate between array substrate 1 and linear polarization plate 6 and between opposed substrate 2 and linear polarization plate 7
- pixel electrode: AC applied (amplitude 0 to 6.5 V, frequency 30 Hz), where Vc (amplitude center) is set at identical potential to common electrode
- common electrode: DC having relative potential of 0 V relative to Vc of pixel electrode applied

As a result, as shown in Fig. 3, an electric line of force was generated in an orthogonal direction to the surfaces of the substrates 1, 2, and an electric field (a transverse electric field) was generated in the substrate surface direction (a parallel direction to the substrate surface) between the pixel electrode 20 and the common electrode 30. Accordingly, a bend-shaped electric field was formed in the liquid crystal layer 3, which exhibited a homeotropic alignment in its initial condition, such that two domains having director directions that differ from each other by 180° were formed. Further, in each domain (between the electrodes), the liquid crystal molecules 4 of the nematic liquid crystal material exhibited a bend-shaped liquid crystal alignment (a bend alignment).

Furthermore, according to this embodiment, as shown in Fig. 3, a magnitude of a tilt (a tilt angle) of the liquid crystal molecule 4 can be varied between the narrow interval region 17 and the wide interval region 18. More specifically, as shown in Fig. 4(A), the tilt angle of a liquid crystal molecule 4b in the narrow interval region 17 is large and the tilt angle of a liquid crystal molecule 4a in the wide interval region 18 is small. In other words, with the TBA mode liquid crystal display device according to this embodiment, the threshold of the VT characteristic can be varied by varying the electrode interval S. More specifically, the threshold can be increased when the electrode interval S is widened and reduced when the electrode interval S is narrowed.

Further, when the liquid crystal display panel 100 is viewed from the head-on direction during low gray scale display, the threshold of the VT characteristic is high in the wide interval region 18, and therefore the liquid crystal molecules 4a of the wide interval region 18 take a circular shape with a small tilt, as shown in Fig. 4(B). In other words, a substantially black display is displayed in the wide interval region 18. Meanwhile, the threshold of the VT characteristic in the narrow interval region 17 at this time is low, and therefore the liquid crystal molecules 4b of the narrow interval region 17 tilt comparatively greatly to take an elliptical shape, as shown in Fig. 4(B). In other words, gray is displayed in the narrow interval region 17. Hence, when the liquid crystal display panel 100 is viewed from the head-on direction during low gray scale display, the black of the wide interval region 18 is interlaced with the gray of the narrow interval region 17 such that a display (a lightness) of the narrow interval region 17 and the wide interval region 18 is averaged, and as a result, an overall display is perceived as gray.

When the liquid crystal display panel 100 is viewed from the diagonal direction during low gray scale display, the liquid crystal molecules 4a of the wide interval region 18 take an elliptical shape, as shown in Fig. 4(C), while the liquid crystal molecules 4b of the narrow interval region 17 take a substantially elliptical shape close to a rod shape. In other words, gray is displayed in both regions 17, 18.

Hence, gray is perceived when the liquid crystal display panel 100 is viewed from both the head-on direction and the diagonal direction, and as a result, the white tinge phenomenon can be artificially suppressed.

By making the multi-domain in the dot and providing the respective domains with VT characteristics having different thresholds in this manner, a plurality of regions having liquid crystal molecules with different tilt angles can be formed.

A difference between the threshold of the VT characteristic in the wide interval region 18 and the threshold of the VT characteristic in the narrow interval region 17 is preferably set at no less than substantially 1.0 V. In so doing, white tinge can be suppressed more effectively.

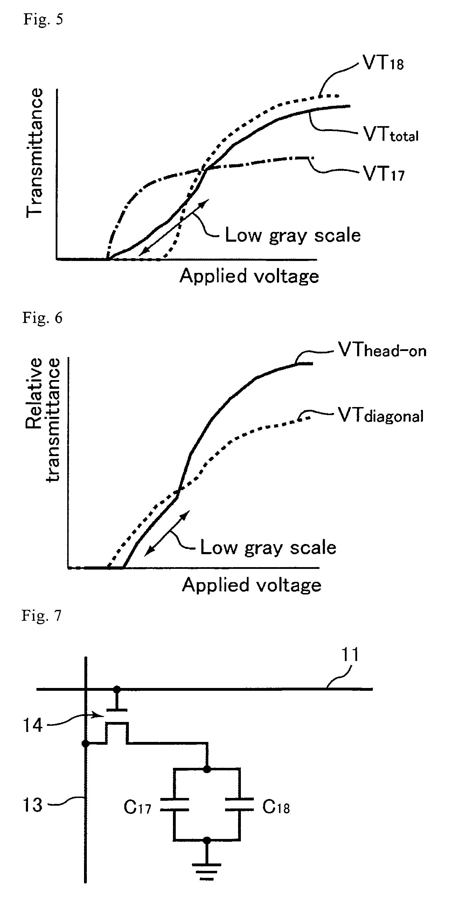

Further, as shown in Fig. 5, by providing at least two regions in which the tilt angles of the liquid crystal molecules differ from each other (the thresholds of the VT characteristics differ from each other) during voltage application, the overall VT characteristic (VTₜₒₜₐₗ) of the dot, obtained by synthesizing the VT characteristic (VT₁₇) of the narrow interval region 17 and the VT characteristic (VT₁₈) of the wide interval region 18, can be caused to vary smoothly, especially at a low gray scale close to black. In other words, a gradient of the VT characteristic (VTₜₒₜₐₗ) can be made gentle, especially at a low gray scale.

As a result, as shown in Fig. 6, a curve of a VT characteristic (VT_{head-on}) during viewing from the head-on direction and a curve of a VT characteristic (VT_{diagonal}) during viewing from the diagonal direction can be smoothened and brought closer to each other, particularly at a low gray scale. In other words, a polar angle dependency of the VT characteristic (variation in the VT characteristic accompanying variation in the polar angle) can be reduced. It is therefore evident that according to this embodiment, white tinge can be suppressed.

Note that an equivalent circuit in the dot portion of the liquid crystal display device according to this embodiment is as shown in Fig. 7, where a liquid crystal capacitor C17 of the narrow interval region 17 and a liquid crystal capacitor C18 of the wide interval region 18 are connected in parallel. Further, image signals are input into the two capacitors C17, C18 via a TFT 14 connected to a gate bus line 11 and a source bus line 13.

Hence, image signals are input directly into the two capacitors C17, C18 from the source bus line 13 via the TFT 14. As a result, the image sticking that occurs with the technique described in Patent Document 1 can be suppressed effectively.

Further, the dot constitution of this embodiment is extremely simple, and white tinge can be suppressed simply by adjusting the electrode interval S. Therefore, in comparison with the technique described in Patent Document 2, processing can be simplified and costs can be reduced, which are great advantages.

### (First comparative embodiment)

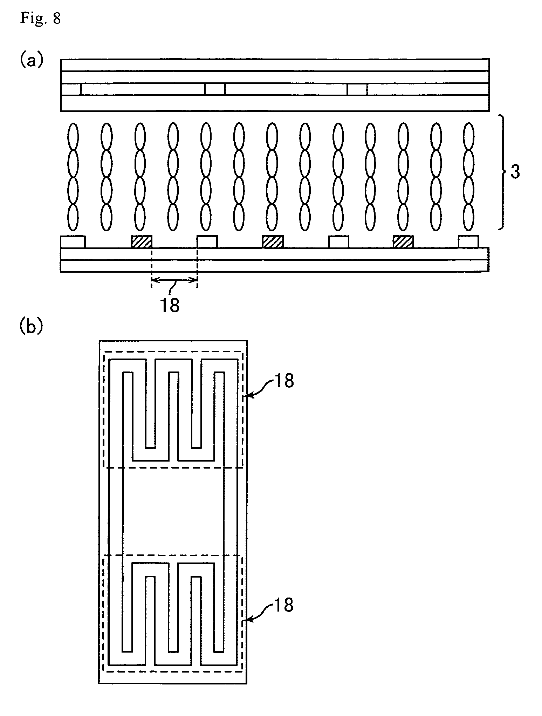

As shown in Fig. 8, a liquid crystal display device according to this comparative embodiment is constituted similarly to the liquid crystal display device according to the first embodiment except that the narrow interval region 17 is not provided and therefore only the wide interval region 18 is formed in each dot.

Likewise in this comparative embodiment, as shown in Fig. 8(A), the liquid crystal layer 3 exhibits a homeotropic alignment when no voltage is applied.

Fig. 9 shows results obtained by calculating the behavior of the liquid crystal according to this comparative embodiment during voltage application in a simulation. Note that this simulation was performed under similar conditions to the conditions of the first embodiment except that the line width L and the electrode interval S were set at only L/S = 2.5 µm/8.0 µm in the dot. Further, Fig. 10 is a pattern diagram showing the behavior of the liquid crystal during voltage application according to this comparative embodiment.

As a result, as shown in Figs. 9 and 10, an electric line of force was generated in an orthogonal direction to the surfaces of the substrates 1, 2, and an electric field (the transverse electric field 5) was generated in the substrate surface direction between the pixel electrode 20 and the common electrode 30. Accordingly, a bend-shaped electric field was formed in the liquid crystal layer 3, which exhibited a homeotropic alignment in its initial condition, such that two domains having director directions that differ from each other by 180° were formed. Further, in each domain, the liquid crystal molecules 4 of the nematic liquid crystal material exhibited a bend-shaped liquid crystal alignment (a bend alignment).

However, in this comparative embodiment, as shown in Fig. 9, the tilt angles of the liquid crystal molecules 4 are similarly small in all regions of the dot. Further, in this comparative embodiment, when the liquid crystal molecule 4 is viewed from the head-on direction during low gray scale display such as that shown in Fig. 11(A), the liquid crystal molecule 4 takes a circular shape, as shown in Fig. 11(B). In other words, when the liquid crystal molecule 4 is viewed from the head-on direction during low gray scale display, the liquid crystal molecule 4 is perceived to be substantially black. When viewed from the diagonal direction, on the other hand, the liquid crystal molecule 4 takes an elliptical shape, as shown in Fig. 11(C). Therefore, when the liquid crystal molecule 4 is viewed from the diagonal direction during low gray scale display, light leaks. In other words, white tinge is perceived.

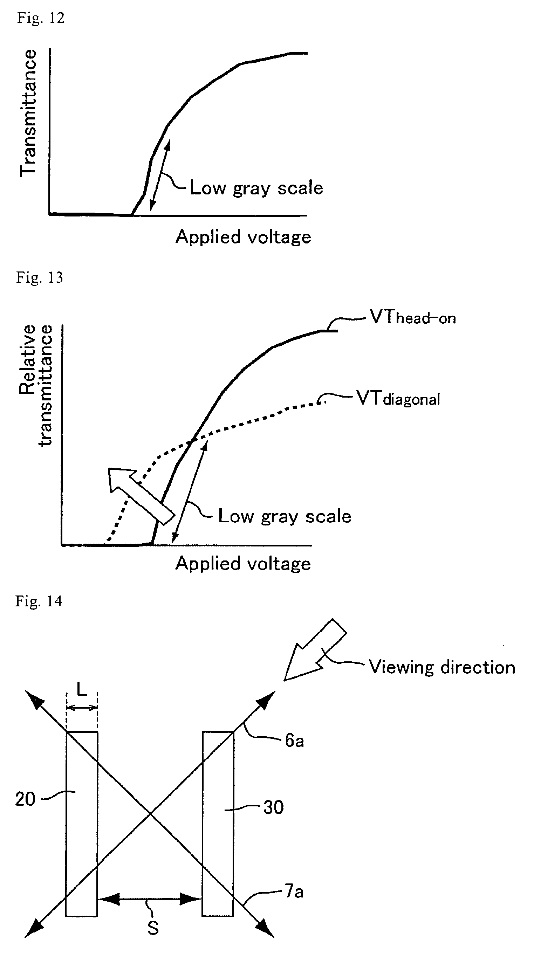

Further, the electrode interval S is of a single type, and therefore the tilt angles of the liquid crystal molecules during voltage application are uniform throughout the dot. Hence, as shown in Fig. 12, the VT characteristic according to this comparative embodiment varies rapidly at a low gray scale close to black.

Furthermore, as shown in Fig. 13, the curve of the VT characteristic (VT_{head-on}) during viewing from the head-on direction and the curve of the VT characteristic (VT_{diagonal}) during viewing from the diagonal direction are both sharp and diverge greatly from each other, particularly at a low gray scale. In other words, the polar angle dependency of the VT characteristic is great. It is therefore evident that in this comparative embodiment, white tinge occurs.

Next, results obtained by investigating the white tinge characteristics of the liquid crystal display devices according to the first embodiment and the first comparative embodiment in further detail by performing simulations will be described.

Fig. 14 is a planar pattern diagram showing a constitution of a dot used in a simulation (a three-dimensional simulation). In this simulation, as shown in Fig. 14, the pixel electrode 20 and the common electrode 30 were disposed in the up-down direction. Further, the absorption axis directions 6a, 7a of the linear polarization plates were set respectively in 45° directions relative to extension directions of the pixel electrode 20 and the common electrode 30.

Other simulation conditions were set as follows.
- dΔn: 350 nm
- Δε: 20
- γ1: 200
- negative C plate single layer (in-plane direction retardation Re: 0 nm, normal direction retardation Rth: 270 nm) disposed as optical compensation plate between array substrate 1 and linear polarization plate 6 and between opposed substrate 2 and linear polarization plate 7
- pixel electrode: AC applied (amplitude 0 to 6.5 V, frequency 30 Hz), where Vc (amplitude center) is set at identical potential to common electrode
- common electrode: DC having relative potential of 0 V relative to Vc of pixel electrode applied
   Unless noted otherwise, these conditions were also employed in simulations to be described below.

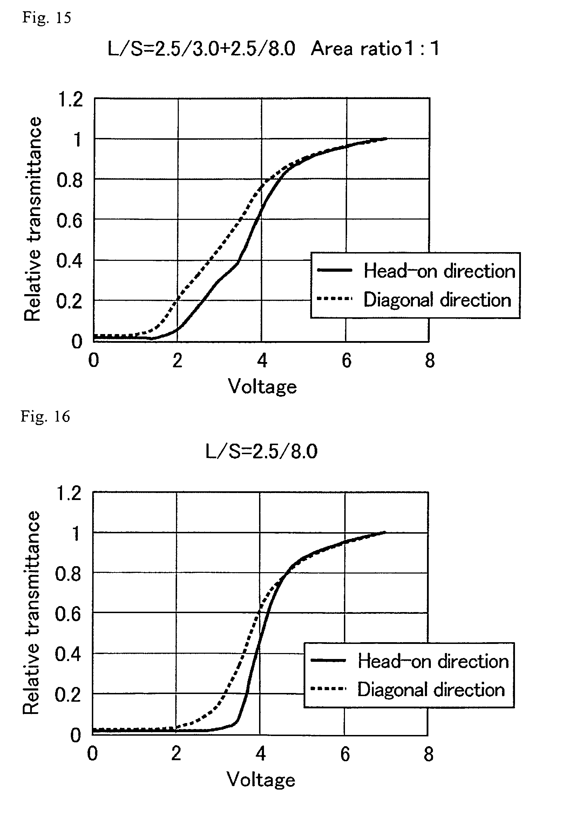

Fig. 15 shows the VT characteristic of the entire dot in the liquid crystal display device according to the first embodiment when L/S in the narrow interval region 17 = 2.5 µm/3 µm, L/S in the wide interval region 18 = 2.5 µm/8 µm, and the ratio between the surface area Aₙ of the narrow interval region 17 and the surface area A_{w} of the wide interval region 18 is set at 1 : 1.

Note that the VT characteristic of the entire dot was determined by calculating the VT characteristic of the narrow interval region 17 and the VT characteristic of the wide interval region 18 respectively using the model shown in Fig. 14 and then synthesizing the calculated VT characteristics at a predetermined area ratio. An ordinate of a graph of the VT characteristic shows the transmittance (relative transmittance) when the transmittance during white display (256 gray scale display) is set at 1.

As a result, as shown in Fig. 15, it was confirmed that with the liquid crystal display device according to the first embodiment, the VT characteristic during viewing from the head-on direction and the VT characteristic during viewing from a diagonal direction (bearing 45°, polar angle 60°) both varied gently.

Note that the diagonal direction (bearing 45°, polar angle 60°) indicates a 45° direction and a direction tilted 60° from the head-on direction.

Further, Fig. 16 shows the VT characteristic of the entire dot in the liquid crystal display device according to the first comparative embodiment when L/S = 2.5 µm/8 µm.

As a result, as shown in Fig. 16, it was confirmed that with the liquid crystal display device according to the first comparative embodiment, the VT characteristic during viewing from the head-on direction and the VT characteristic during viewing from the diagonal direction (bearing 45°, polar angle 60°) both varied rapidly during low gray scale display.

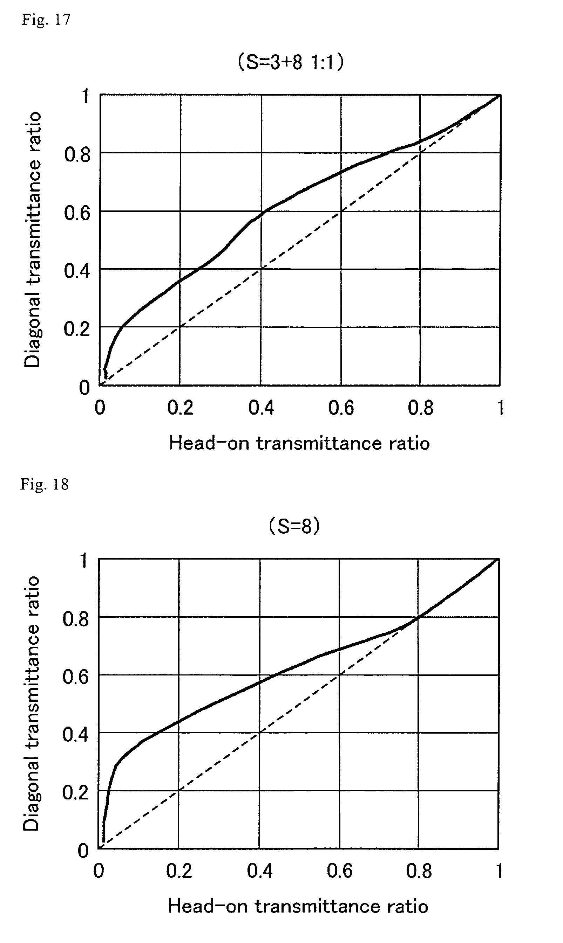

Fig. 17 shows the white tinge characteristic (γ shift) of the liquid crystal display device according to the first embodiment, calculated on the basis of the results shown in Fig. 15. Further, Fig. 18 shows the white tinge characteristic (γ shift) of the liquid crystal display device according to the first comparative embodiment, calculated on the basis of the results shown in Fig. 16.

Note that on the graph of the white tinge characteristic (γ shift), the relative transmittance (head-on transmittance ratio) during viewing from the head-on direction is set on the abscissa and the relative transmittance (diagonal transmittance ratio) during viewing from the diagonal direction (bearing 45°, polar angle 60°) is set on the ordinate.

As a result, in the first comparative embodiment, as shown in Fig. 18, the diagonal transmittance ratio was 0.36 at a head-on transmittance ratio of 0.1 (corresponding to 96 gray scales of 256 gray scales), and the diagonal transmittance ratio was 0.43 at a head-on transmittance ratio of 0.2 (corresponding to 128 gray scales of 256 gray scales). In other words, it is evident that with the first comparative embodiment, the diagonal transmittance ratio increases relative to the head-on transmittance ratio, particularly from a low gray scale to a halftone, and as a result, white tinge occurs strikingly.

In the first embodiment, on the other hand, as shown in Fig. 17, the diagonal transmittance ratio was 0.26 at a head-on transmittance ratio of 0.1 and the diagonal transmittance ratio was 0.36 at a head-on transmittance ratio of 0.2. In other words, it is evident that the diagonal transmittance ratio can be brought close to the head-on transmittance ratio, particularly from a low gray scale to a halftone, and as a result, white tinge can be suppressed.

Note that human sight is particularly sensitive to transmittance variation during low gray scale to halftone display. In other words, since the divergence between the head-on transmittance ratio and the diagonal transmittance ratio is small in the first embodiment, particularly from a low gray scale to a halftone, the perception of white tinge can be suppressed even more effectively.

Next, results obtained by investigating the white tinge characteristic according to the first embodiment while varying the ratio Aₙ : A_{w} between the surface area Aₙ of the narrow interval region 17 and the surface area A_{w} of the wide interval region 18 will be described.

The electrode interval S of the narrow interval region 17 was set at 3, 4 or 5 µm, and the electrode interval S of the wide interval region 18 was set at 8, 10 or 12 µm. Further, the electrode width L was fixed at 2.5 µm in both the narrow interval region 17 and the wide interval region 18. Aₙ : A_{w} was set at 1 : 1, 1 : 1.5, 1 : 2, 1 : 2.5, or 1 : 3.

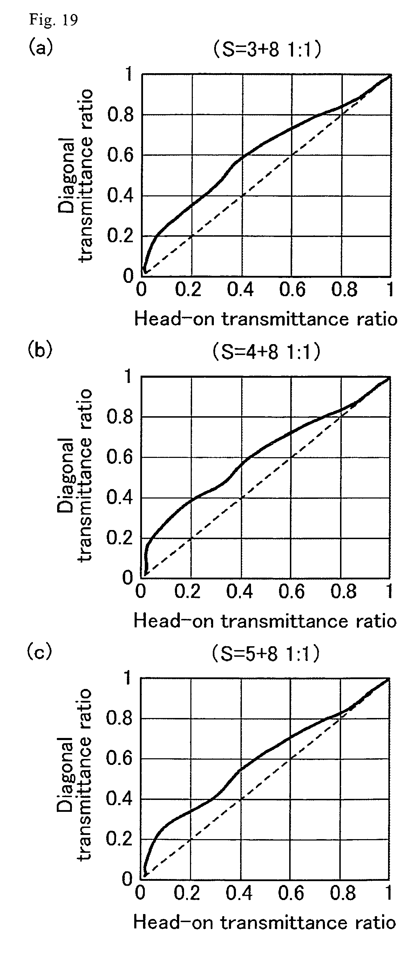

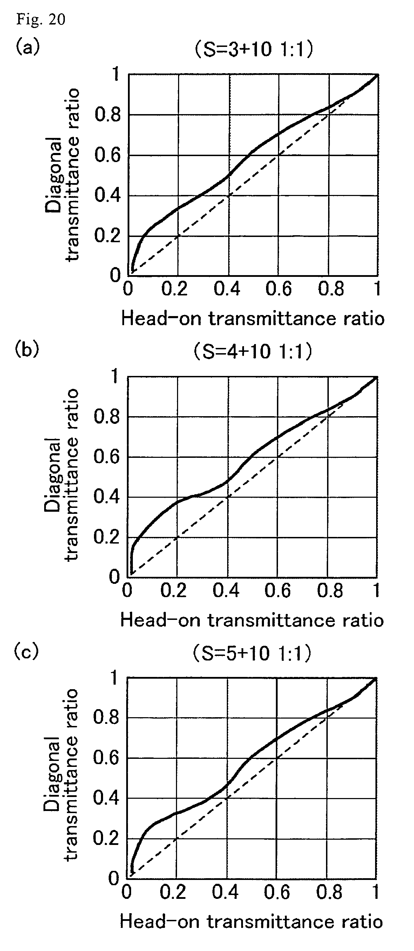

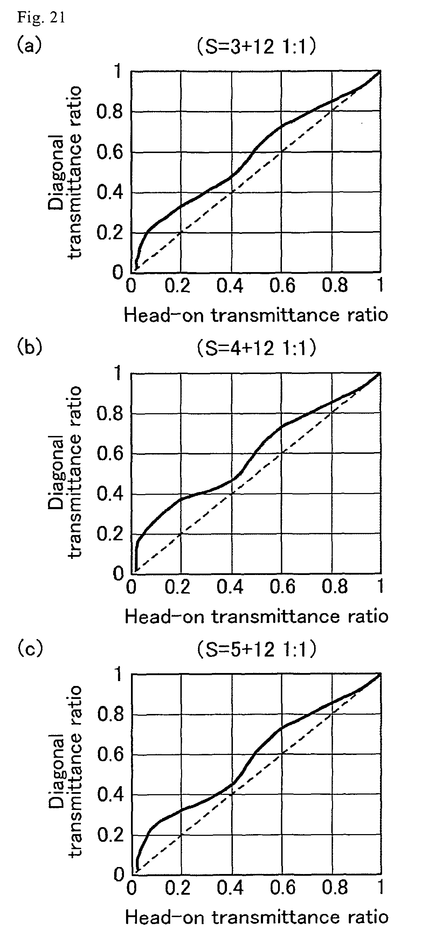

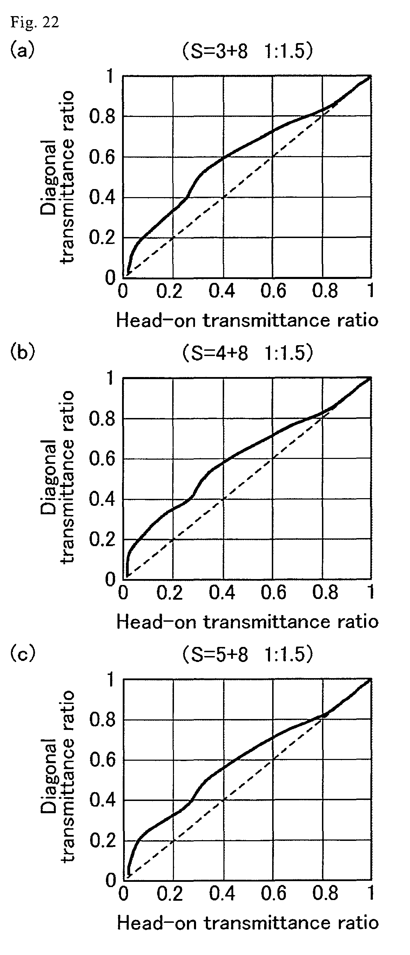

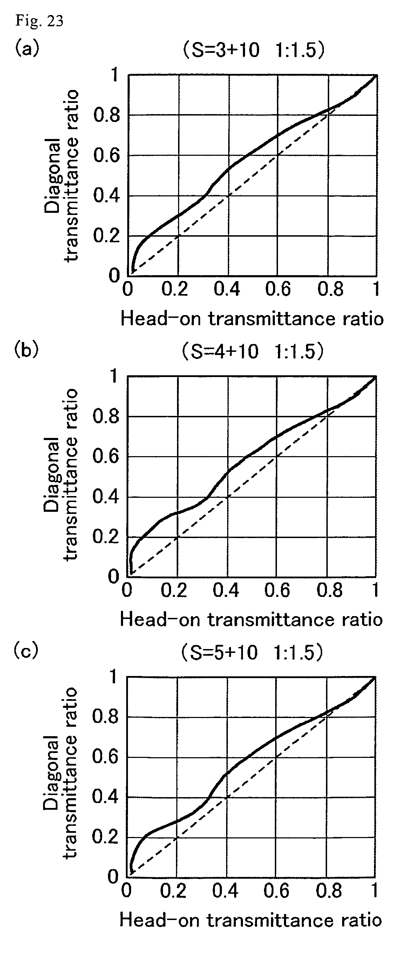

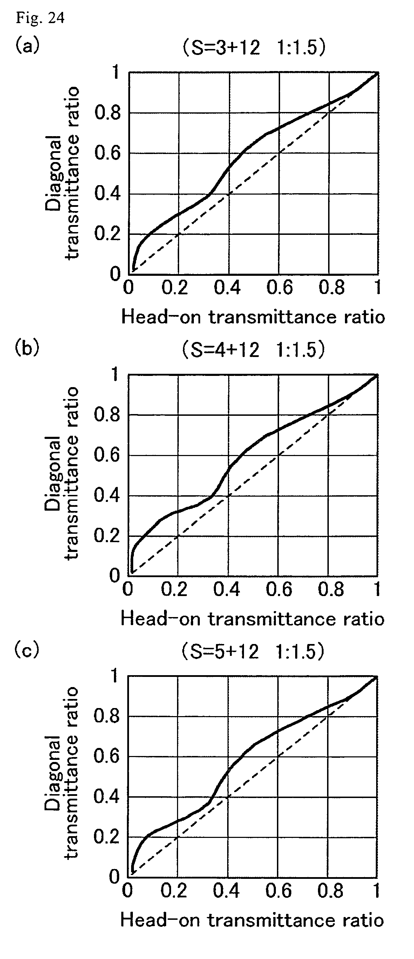

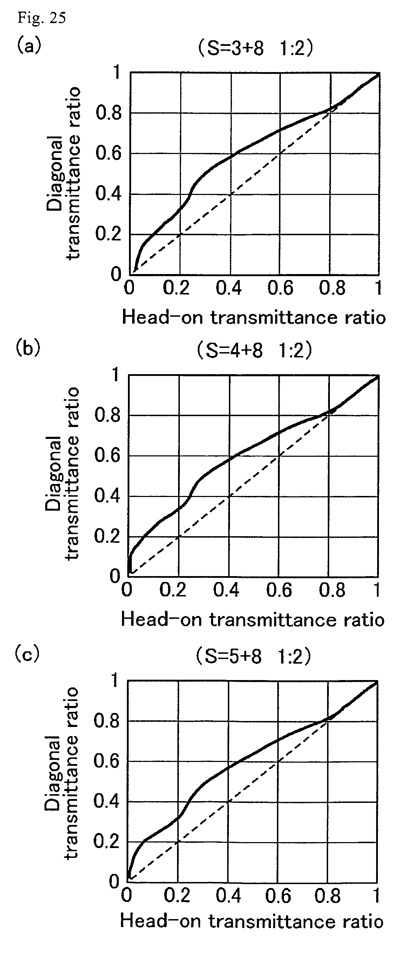

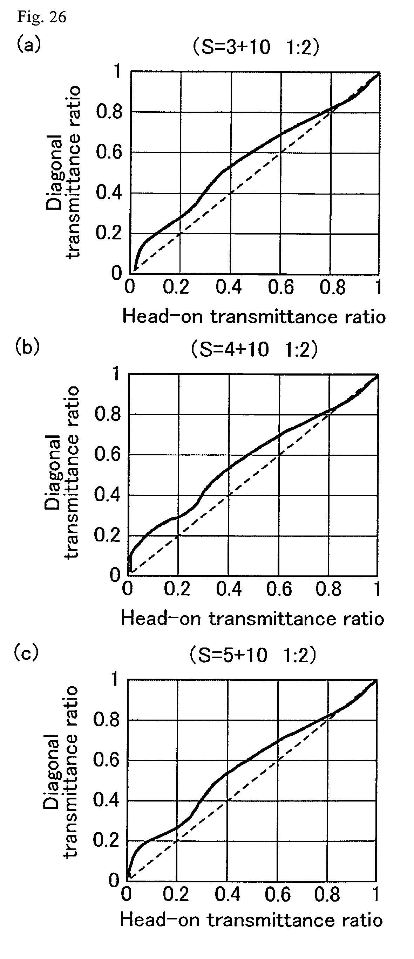

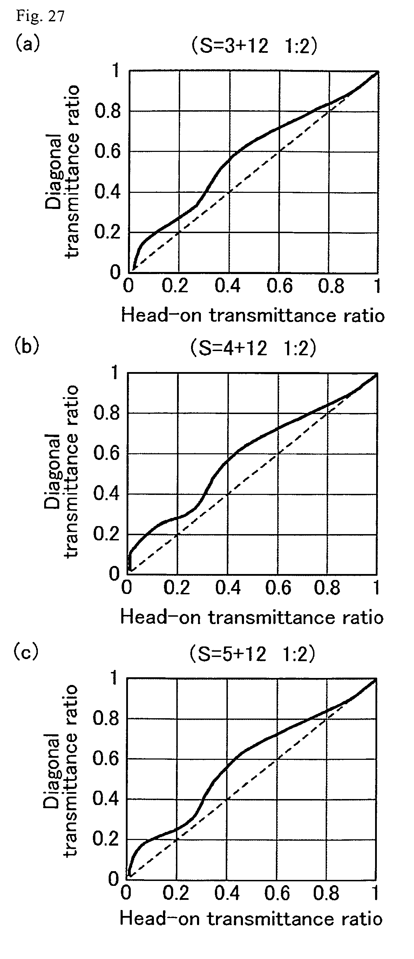

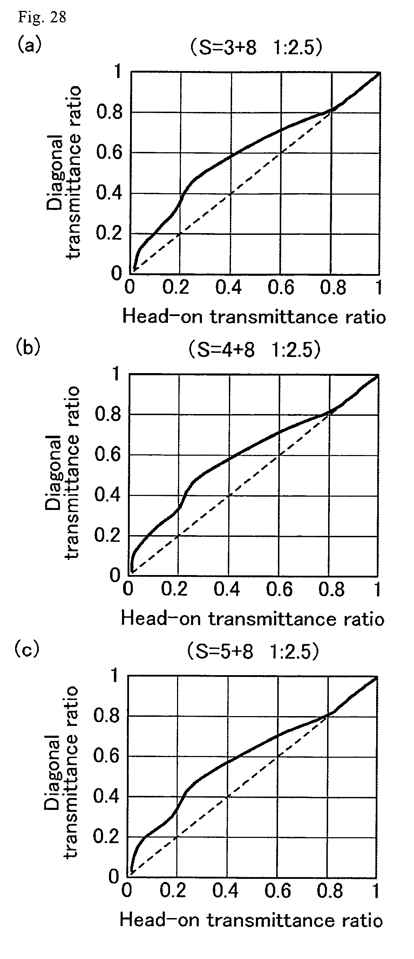

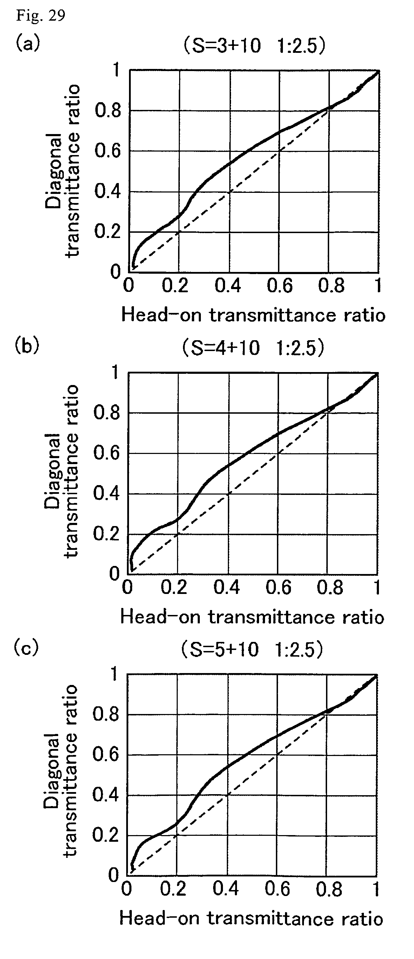

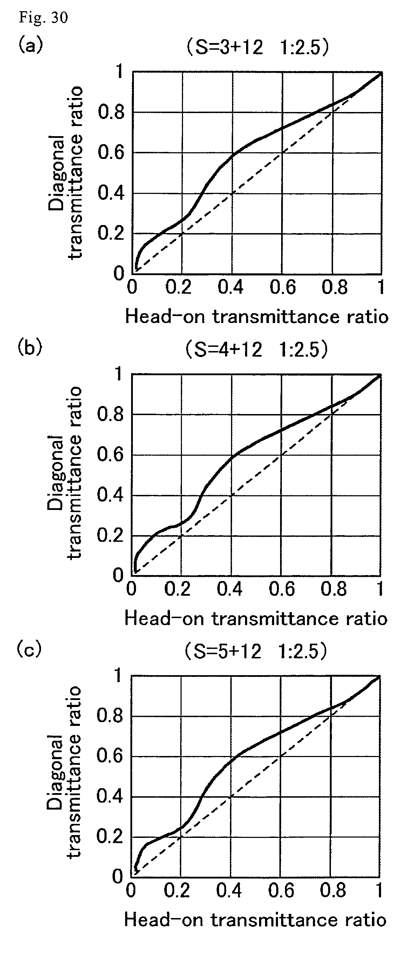

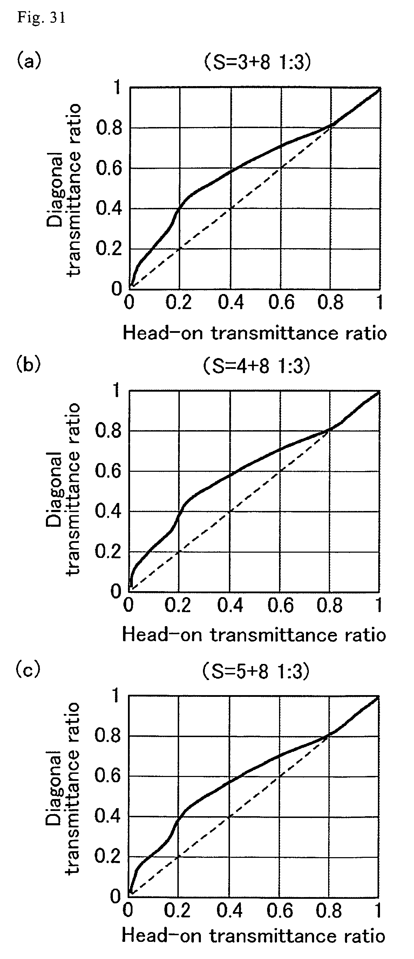

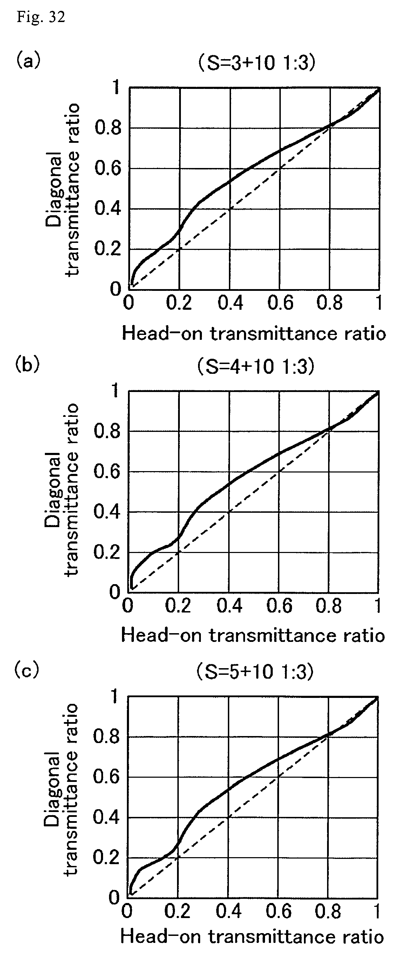

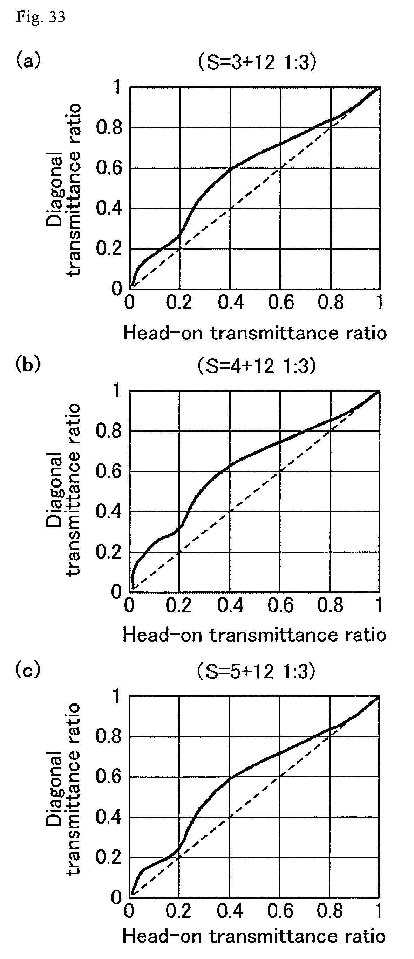

Figs. 19 to 21 show the white tinge characteristic when Aₙ : A_{w} was set at 1 : 1. Figs. 22 to 24 show the white tinge characteristic when Aₙ : A_{w} was set at 1 : 1.5. Figs. 25 to 27 show the white tinge characteristic when Aₙ : A_{w} was set at 1 : 2. Figs. 28 to 30 show the white tinge characteristic when Aₙ : A_{w} was set at 1 : 2.5. Figs. 31 to 33 show the white tinge characteristic when Aₙ : A_{w} was set at 1 : 3.

A following Table 1 shows results obtained by extracting the diagonal transmittance ratio at head-on transmittance ratio = 0.1 and the diagonal transmittance ratio at head-on transmittance ratio = 0.2 from the graphs shown in Figs. 19 to 33.

**[Table 1]**

| | | | Transmittance 10% | | | Transmittance 20% | | |
|---|---|---|---|---|---|---|---|---|
| | | | Wider S | | | Wider S | | |
| | | | 8 | 10 | 12 | 8 | 10 | 12 |
| (An:Aw=1:1) | Narrower S | 3 | 0.26 | 0.25 | 0.26 | 0.36 | 0.34 | 0.34 |
| | | 4 | 0.29 | 0.29 | 0.28 | 0.4 | 0.39 | 0.38 |
| | | 5 | 0.28 | 0.27 | 0.26 | 0.35 | 0.32 | 0.32 |
| (An:Aw=1:1.5) | Narrower S | 3 | 0.23 | 0.225 | 0.225 | 0.34 | 0.31 | 0.3 |
| | | 4 | 0.26 | 0.255 | 0.255 | 0.36 | 0.33 | 0.33 |
| | | 5 | 0.25 | 0.23 | 0.23 | 0.325 | 0.285 | 0.28 |
| (An:Aw=1:2) | Narrower S | 3 | 0.22 | 0.21 | 0.2 | 0.34 | 0.29 | 0.28 |
| | | 4 | 0.25 | 0.23 | 0.23 | 0.34 | 0.29 | 0.29 |
| | | 5 | 0.23 | 0.21 | 0.21 | 0.32 | 0.27 | 0.26 |
| (An:Aw=1:2.5) | Narrower S | 3 | 0.21 | 0.19 | 0.19 | 0.37 | 0.265 | 0.27 |
| | | 4 | 0.23 | 0.22 | 0.215 | 0.34 | 0.28 | 0.27 |
| | | 5 | 0.21 | 0.19 | 0.19 | 0.34 | 0.24 | 0.25 |
| (An:Aw=1:3) | Narrower S | 3 | 0.21 | 0.19 | 0.18 | 0.4 | 0.29 | 0.27 |
| | | 4 | 0.23 | 0.21 | 0.26 | 0.36 | 0.27 | 0.33 |
| | | 5 | 0.21 | 0.18 | 0.18 | 0.38 | 0.27 | 0.25 |

It is evident from Table 1 that in all cases, the first embodiment exhibits a superior white tinge characteristic to the first comparative embodiment (diagonal transmittance ratio = 0.36 when head-on transmittance ratio = 0.1, diagonal transmittance ratio = 0.43 when head-on transmittance ratio = 0.2).

Further, by setting the magnitude of Aₙ to be equal to or smaller than the magnitude of A_{w}, a valley (a recessed part) on the white tinge characteristic graph can be generated on the low gray scale side. In other words, the difference between the head-on transmittance ratio and the diagonal transmittance ratio can be reduced on the low gray scale side, and as a result, the perception of white tinge can be suppressed effectively.

Note that in this embodiment, Aₙ may be greater than A_{w}, but in this case, the valley on the white tinge characteristic graph shifts to a high gray scale side. In other words, the difference between the head-on transmittance ratio and the diagonal transmittance ratio on the high gray scale side decreases but the difference between the head-on transmittance ratio and the diagonal transmittance ratio on the low gray scale side barely decreases. Therefore, when Aₙ is greater than A_{w}, the white tinge suppression effect decreases. Further, as described above, human sight is sensitive to transmittance variation during low gray scale to halftone display, and therefore, although the difference between the head-on transmittance ratio and the diagonal transmittance ratio is reduced on the high gray scale side, an image quality improvement effect is small.

Furthermore, when Aₙ is greater than A_{w}, the number of branch portions 22, 32 provided in the dot increases. The branch portions 22, 32 constitute regions through which light is not transmitted, and therefore, in this case, the transmittance decreases.

Moreover, when a proportion of A_{w} exceeds Aₙ : A_{w} = 1 : 3, it may be impossible to suppress white tinge favorably.

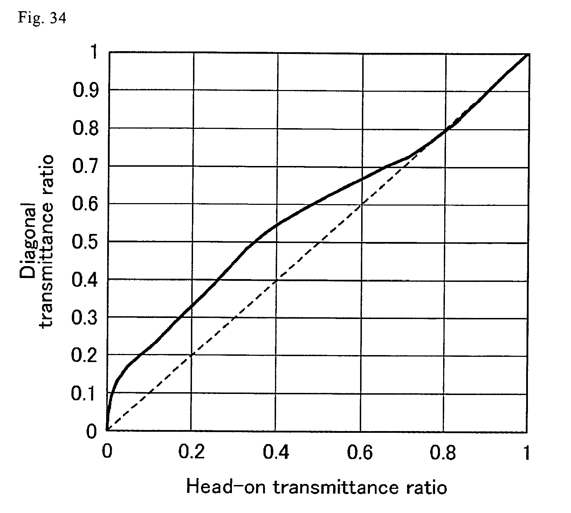

Fig. 34 shows results obtained by investigating the white tinge characteristic of a commercially available MVA mode television. This television employs a multi-pixel driving system. In other words, display is performed in this system by driving a high-brightness sub-dot and a low-brightness sub-dot using two TFTs and averaging the brightness of the dot, similarly to the technique described in Patent Document 2, whereby a superior white tinge suppression effect is obtained.

As a result, with this MVA mode television, a relative brightness (corresponding to the diagonal transmittance ratio) at 96 gray scales (corresponding to a head-on transmittance ratio of 0.1) was 0.25 and the relative brightness at 128 gray scales (corresponding to a head-on transmittance ratio of 0.2) was 0.35.

With the TBA mode liquid crystal display device according to the first embodiment, on the other hand, as shown in Table 1, a superior white tinge suppression effect equal to or greater than that of the MVA mode television described above can be exhibited without the use of a multi-pixel driving system. Note that in Table 1, superior diagonal transmittance ratios equal to or greater than those of the MVA mode television described above are shaded gray.

Further, it is evident from the results shown in Table 1 that Aₙ : A_{w} = 1 : 1.5 to 1 : 3 is preferably satisfied in order to obtain a superior white tinge suppression effect equal to or greater than that of the MVA mode television described above reliably.

Furthermore, to reduce white tinge in the TBA mode, an optimum ratio between the surface area Aₙ of the narrow interval region 17 and the surface area A_{w} of the wide interval region 18 is 1 : 2, and it was found that at this time, an allowable range of the electrode interval S combination was widest.

Further, a substantially identical white tinge suppression effect was obtained when Aₙ : A_{w} = 1 : 2, when Aₙ : A_{w} = 1 : 2.5, and when Aₙ : A_{w} = 1 : 3.

Furthermore, white tinge was suppressed to the greatest extent with a combination of Aₙ : A_{w} = 1 : 3, electrode width L = 2.5 µm, electrode interval S of narrow interval region 17 = 5 µm, and electrode interval S of wide interval region 18 = 12 µm.

Next, the white tinge characteristic according to the first embodiment when the electrode width L is modified from 2.5 µm to 3.0 µm will be described.

Here, the electrode width L was fixed at 3.0 µm in both the narrow interval region 17 and the wide interval region 18, the electrode interval S of the narrow interval region 17 was set at 3, 4 or 5 µm, and the electrode interval S of the wide interval region 18 was set at 8, 10 or 12 µm. The ratio between the surface area of the narrow interval region 17 and the surface area of the wide interval region 18 was set at 1 : 1, 1 : 2, or 1 : 3.

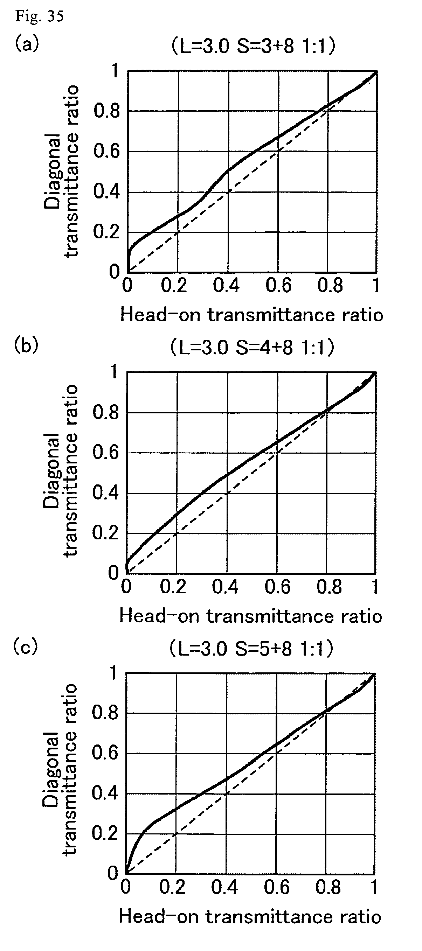

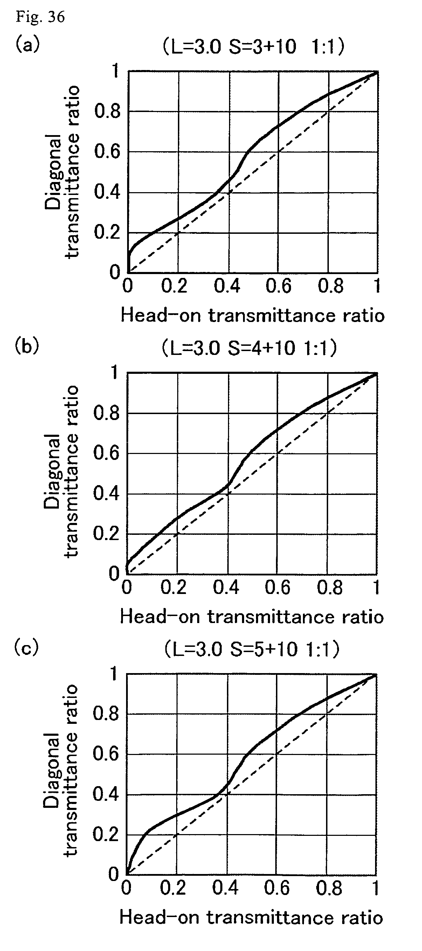

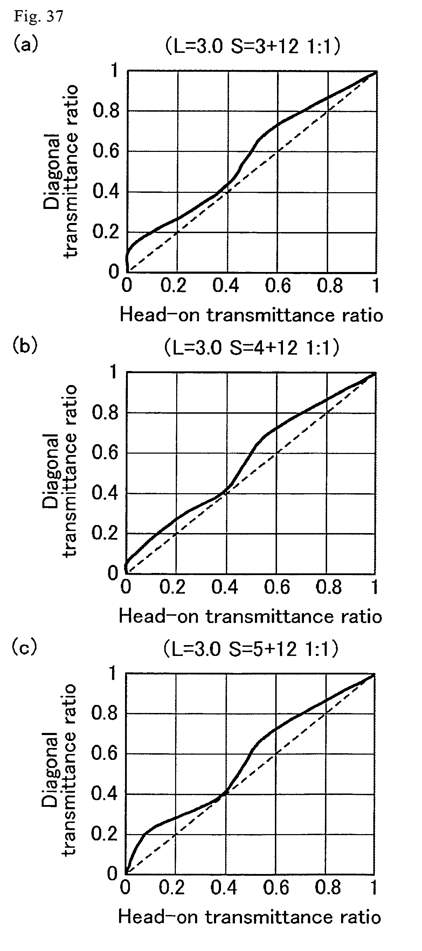

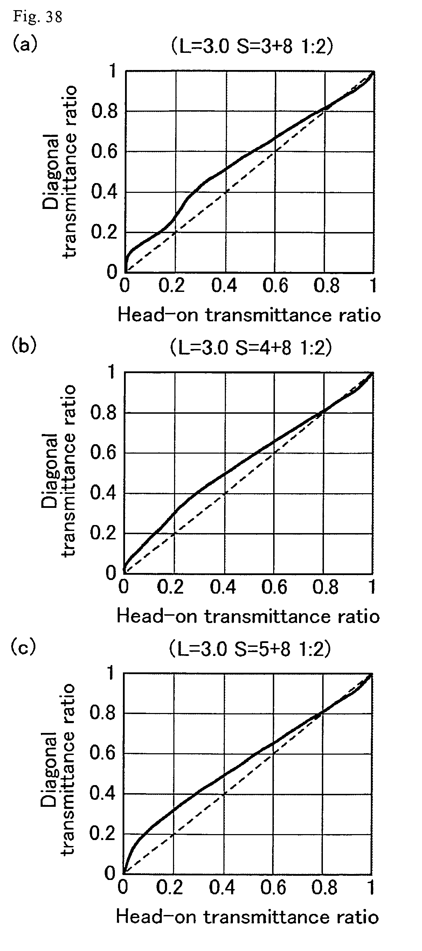

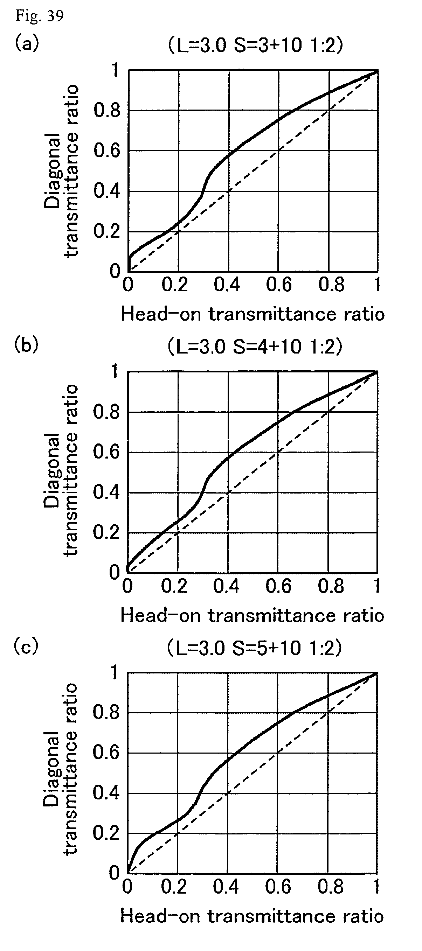

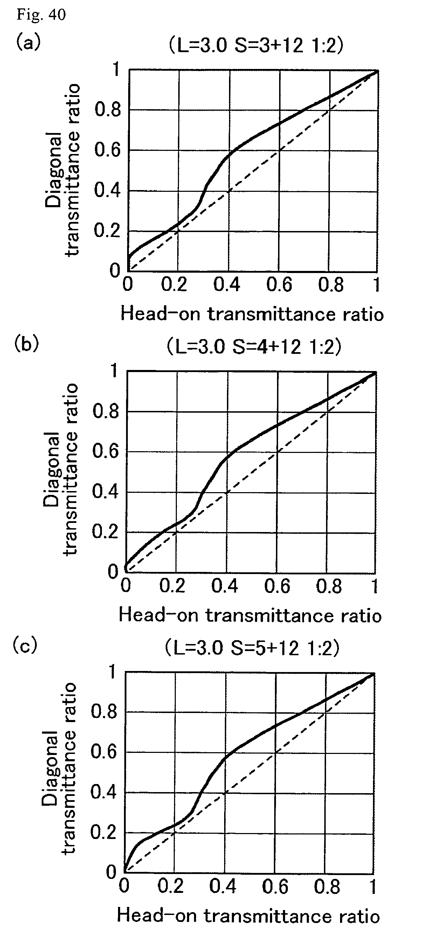

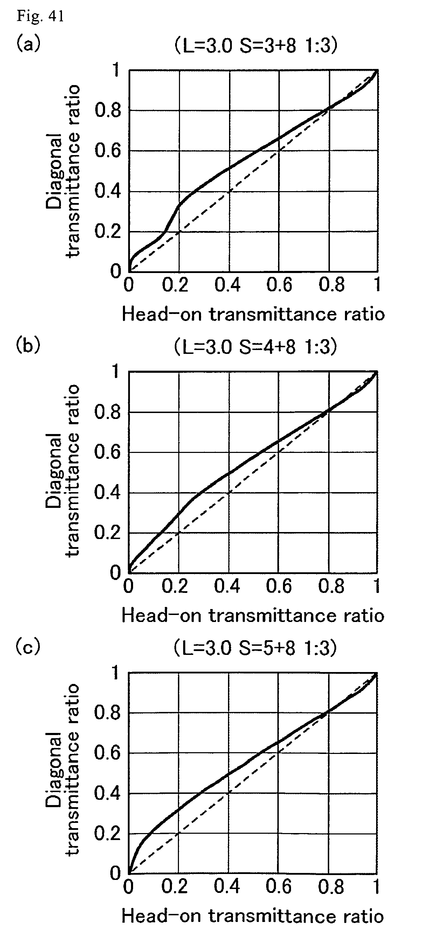

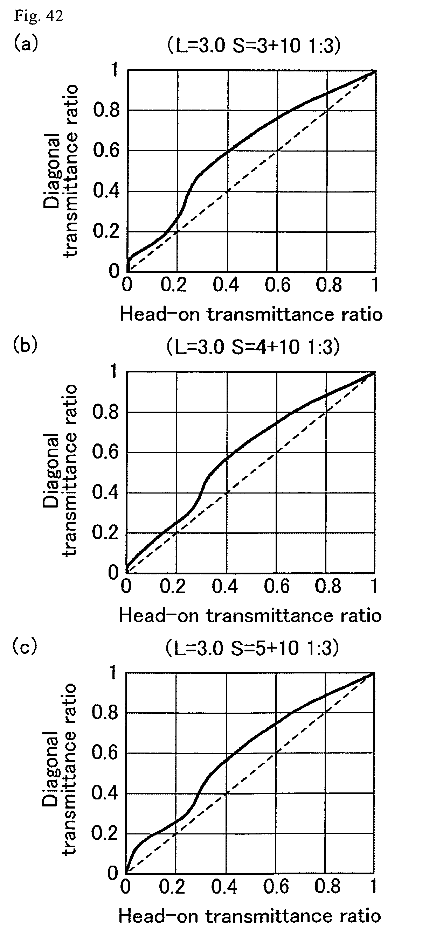

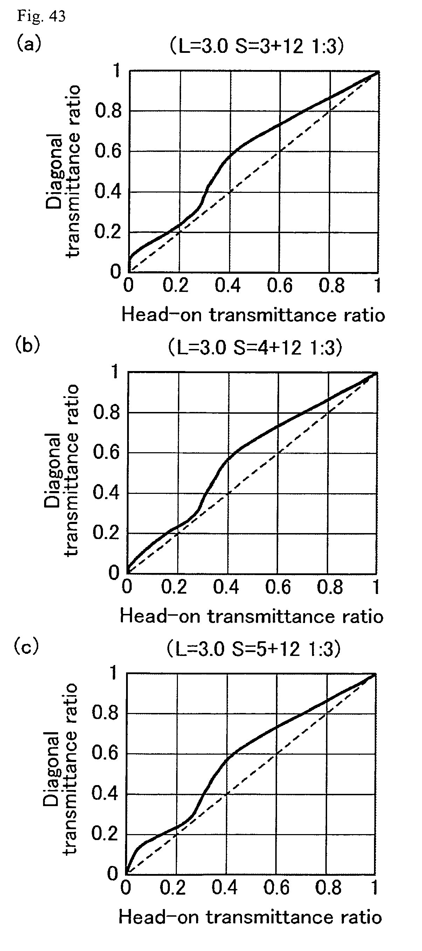

Figs. 35 to 37 show the white tinge characteristic when Aₙ : A_{w} was set at 1 : 1. Figs. 38 to 40 show the white tinge characteristic when Aₙ : A_{w} was set at 1 : 2. Figs. 41 to 43 show the white tinge characteristic when Aₙ : A_{w} was set at 1 : 3.

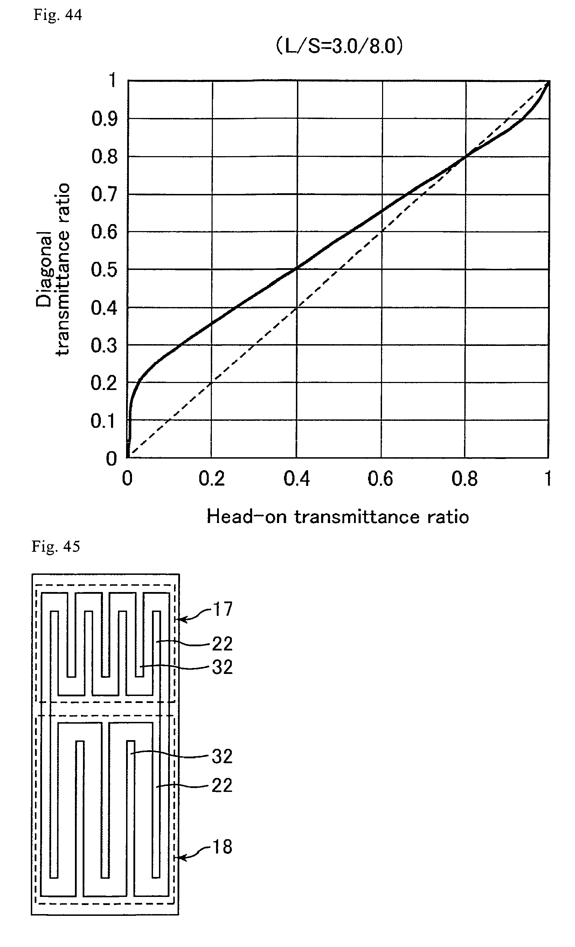

Further, Fig. 44 shows results obtained by investigating the white tinge characteristic according to the first comparative embodiment when the electrode width L was modified from 2.5 µm to 3.0 µm. It was found as a result that when the electrode width L was set at 3.0 µm in the first comparative embodiment, the diagonal transmittance ratio at a head-on transmittance ratio of 0.1 was 0.28 and the diagonal transmittance ratio at a head-on transmittance ratio of 0.2 was 0.36.

A following Table 2 shows results obtained by extracting the diagonal transmittance ratio at head-on transmittance ratio = 0.1 and the diagonal transmittance ratio at head-on transmittance ratio = 0.2 from the graphs according to the first embodiment, shown in Figs. 35 to 43.

**[Table 2]**

| | | | Transmittance 10% | | | Transmittance 20% | | |
|---|---|---|---|---|---|---|---|---|
| | | | Wider S | | | Wider S | | |
| | | | 8 | 10 | 12 | 8 | 10 | 12 |
| (An:Aw=1:1) | Narrower S | 3 | 0.21 | 0.2 | 0.2 | 0.28 | 0.27 | 0.27 |
| | | 4 | 0.18 | 0.18 | 0.18 | 0.29 | 0.28 | 0.28 |
| | | 5 | 0.24 | 0.23 | 0.23 | 0.33 | 0.3 | 0.29 |
| (An:Aw=1:2) | Narrower S | 3 | 0.17 | 0.16 | 0.16 | 0.27 | 0.25 | 0.23 |
| | | 4 | 0.17 | 0.16 | 0.15 | 0.31 | 0.26 | 0.24 |
| | | 5 | 0.22 | 0.19 | 0.18 | 0.32 | 0.27 | 0.24 |
| (An:Aw=1:3) | Narrower S | 3 | 0.15 | 0.15 | 0.16 | 0.33 | 0.27 | 0.24 |
| | | 4 | 0.16 | 0.15 | 0.15 | 0.29 | 0.25 | 0.24 |
| | | 5 | 0.21 | 0.19 | 0.17 | 0.31 | 0.26 | 0.24 |

It is evident from Table 2 that in all cases, the first embodiment exhibits a superior white tinge characteristic to the first comparative embodiment (diagonal transmittance ratio = 0.28 when head-on transmittance ratio = 0.1, diagonal transmittance ratio = 0.36 when head-on transmittance ratio = 0.2). In other words, it was found that the liquid crystal display device according to the first embodiment is capable of suppressing white tinge regardless of the electrode width L.

It was also found that even when the electrode width L is modified from 2.5 µm to 3.0 µm, white tinge can be suppressed to the greatest extent when the ratio between the surface area Aₙ of the narrow interval region 17 and the surface area A_{w} of the wide interval region 18 is 1 : 2.

Fig. 45 shows the liquid crystal display device according to the first embodiment in a case where the ratio between the surface area of the narrow interval region 17 and the surface area of the wide interval region 18 is set at 1 : 2. As shown in Fig. 45, Aₙ : A_{w} can be adjusted by modifying the length of the branch portions 22 of the pixel electrode 20 and the branch portions 32 of the common electrode 30 in the narrow interval region 17 and the wide interval region 18, respectively.

Hence, Aₙ : A_{w} can be adjusted easily by modifying an electrode layout. Modified examples of a dot pattern employed in the liquid crystal display device according to the first embodiment will be described below.

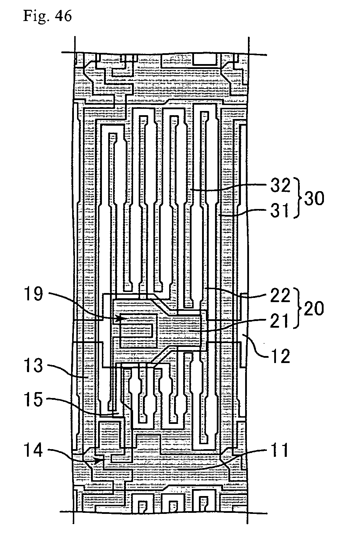

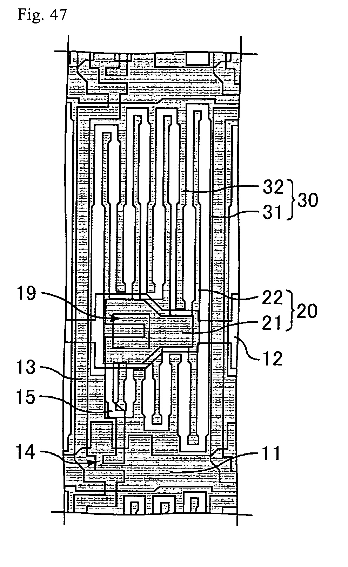

As shown in Figs. 46 and 47, the branch portions 22 and the branch portions 32 may be bent. In so doing, the electrode interval S can be varied in stepped fashion along the extension direction of the branch portions 22 and the branch portions 32.

Note that in Fig. 46, Aₙ : A_{w} is set at 1 : 1, and in Fig. 47, Aₙ : A_{w} is set at 1 : 2. Further, in Figs. 46 and 47, 11 denotes a gate bus line, 12 denotes a Cs bus line, 13 denotes a source bus line, 14 denotes a TFT, 15 denotes a drain wiring, and 19 denotes a contact hole for connecting the drain wiring 15 and the pixel electrode 20.

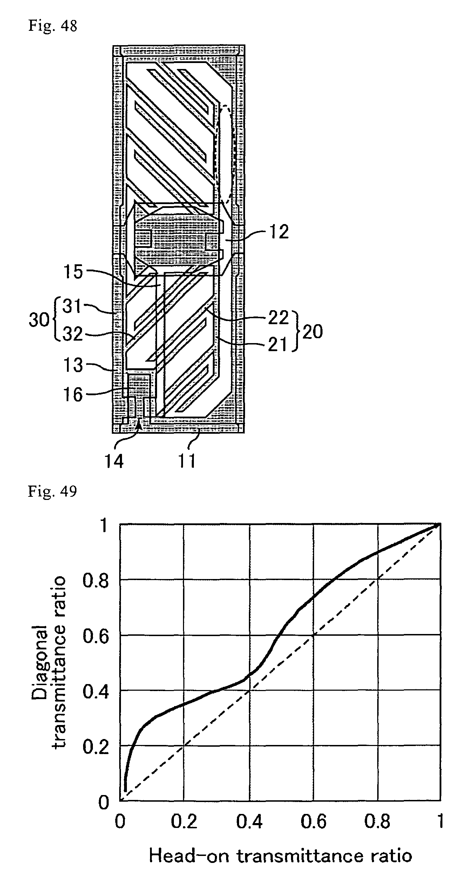

The liquid crystal display device (Aₙ : A_{w} = 1 : 1) shown in Fig. 46 was actually manufactured as a test model, and results obtained by measuring the white tinge characteristic thereof are shown in Fig. 49. In the test model, L/S in the narrow interval region 17 was set at 2.5 µm/3.0 µm, L/S in the wide interval region 18 was set at 2.5 µm/8.0 µm, and a nematic liquid crystal material in which dΔn = 350 nm, Δε = 20, and γ1 = 200 was used. Further, the vertical alignment layer was formed from polyimide. Furthermore, negative C plates (in-plane direction retardation Re: 0 nm, normal direction retardation Rth: 270 nm) constituted by a TAC and a phase difference plate were disposed respectively between the array substrate 1 and the linear polarization plate 4 and between the opposed substrate 2 and the linear polarization plate 5. An AC voltage (amplitude 0 to 6.5 V, frequency 30 Hz) was applied to the pixel electrode. Note that Vc (the amplitude center) of the AC voltage applied to the pixel electrode was set at an identical potential to the potential of the common electrode. Further, a DC voltage having a relative potential of 0 V relative to Vc of the AC voltage applied to the pixel electrode was applied to the common electrode.

As a result, as shown in Fig. 49, the diagonal transmittance ratio at a head-on transmittance ratio of 0.1 was 0.30 and the diagonal transmittance ratio at a head-on transmittance ratio of 0.2 was 0.37. Hence, the actual test model in which Aₙ : A_{w} = 1 : 1 was capable of suppressing white tinge and exhibited an equal white tinge characteristic to a commercially available MVA mode television.

Description of the modified examples of the dot pattern will be continued below.
As shown in Fig. 48, the branch portions 22 and the branch portions 32 may be disposed in a diagonal direction when the liquid crystal display panel is seen head-on.

More specifically, the trunk portion 21 of the pixel electrode 20 is formed in a T shape in the up-down and 180° directions when seen from above so that the dot region having a rectangular shape when seen from above is bisected vertically. Further, the branch portions 22 of the pixel electrode 20 extend from the trunk portion 21 in a 135° or 225° direction, and the branch portions 32 of the common electrode 30 extend from the trunk portion 31 in a 45° or 315° direction.

The branch portion 22 or the branch portion 32 (a line) forms a group with the large and small electrode intervals S (spaces) adjacent to the branch portion 22 or the branch portion 32, and a plurality of these groups are provided within the dot.

Furthermore, in this case, the absorption axis 6a of the linear polarization plate 6 is disposed in the up-down direction and the absorption axis 7a of the linear polarization plate 7 is disposed in the left-right direction. In so doing, a superior contrast ratio can be exhibited with respect to horizontal and vertical directions. This is particularly desirable in a case where this embodiment is employed in a large liquid crystal display device (a television or the like).

Further, the pixel electrode 20 and the common electrode 30 respectively include two types of branch portions 22 and branch portions 32 having mutually orthogonal extension directions, and therefore two types of bend-shaped electric fields having mutually orthogonal electric field directions are formed in a single dot. In other words, two domains are formed in the respective types of branch portions 22 and branch portions 32, and therefore a total of four domains are formed in a single dot. As a result, viewing angle compensation without bias is possible in the up-down and left-right directions and at all bearings.

In Fig. 48, Aₙ : A_{w} is set at 1 : 2. Further, in Fig. 48, 11 denotes a gate bus line, 12 denotes a Cs bus line, 13 denotes a source bus line, 14 denotes a TFT, 15 denotes a drain wiring, and 16 denotes a gate of the TFT 14, which is connected to the gate bus line 11.

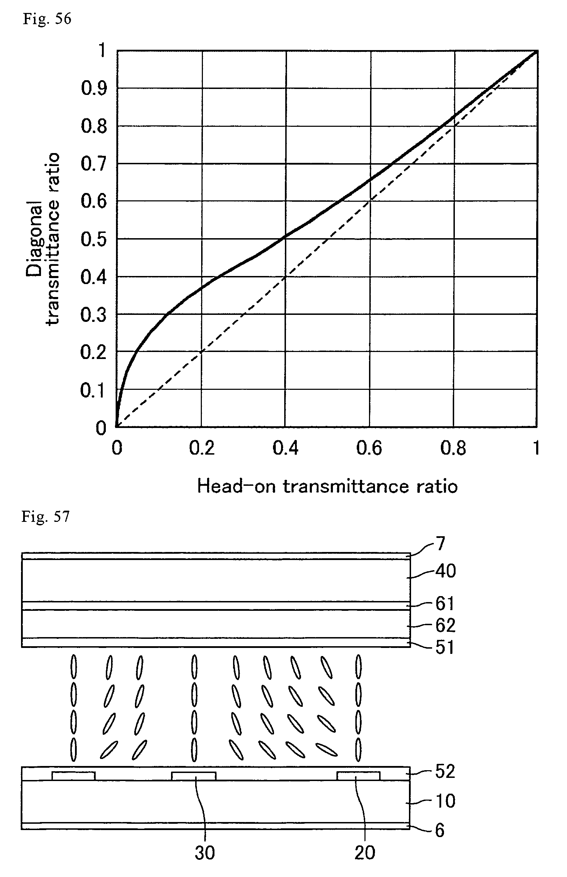

The liquid crystal display device (Aₙ : A_{w} = 1 : 2) shown in Fig. 48 was actually manufactured as a test model, and results obtained by measuring the white tinge characteristic thereof are shown in Fig. 56. In the test model, L/S in the narrow interval region 17 was set at 2.5 µm/3.0 µm, L/S in the wide interval region 18 was set at 2.5 µm/10.0 µm, and a nematic liquid crystal material in which dΔn = 350 nm, Δε = 20, and γ1 = 200 was used. Further, the vertical alignment layer was formed from polyimide. Furthermore, negative C plates (in-plane direction retardation Re: 0 nm, normal direction retardation Rth: 270 nm) constituted by a TAC and a phase difference plate were disposed respectively between the array substrate 1 and the linear polarization plate 4 and between the opposed substrate 2 and the linear polarization plate 5. An AC voltage (amplitude 0 to 6.5 V, frequency 30 Hz) was applied to the pixel electrode. Note that Vc (the amplitude center) of the AC voltage applied to the pixel electrode was set at an identical potential to the potential of the common electrode. Further, a DC voltage having a relative potential of 0 V relative to Vc of the AC voltage applied to the pixel electrode was applied to the common electrode.

As a result, as shown in Fig. 56, the diagonal transmittance ratio at a head-on transmittance ratio of 0.1 was 0.28 and the diagonal transmittance ratio at a head-on transmittance ratio of 0.2 was 0.37. Hence, the actual test model in which Aₙ : A_{w} = 1 : 2 was capable of suppressing white tinge and exhibited an equivalent white tinge characteristic to a commercially available MVA mode television.

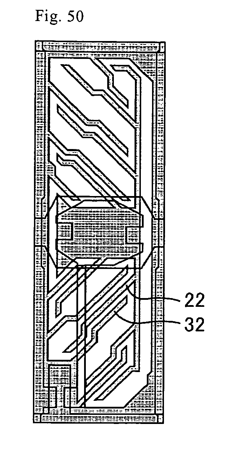

Description of the modified examples of the dot pattern will be continued below.
In the dot pattern shown in Fig. 48, the branch portions 22 and the branch portions 32 may respectively be bent, as shown in Fig. 50. Note that in Fig. 50, Aₙ : A_{w} is set at 1 : 2.

In the embodiments shown in Figs. 48 and 50, however, an electric field generated by the trunk portion 21 of the pixel electrode 20 and the trunk portion 31 of the common electrode 30 in a region sandwiched between the trunk portion 21 and the trunk portion 31 (in Fig. 48, for example, a region surrounded by a dotted line ellipse) is oriented in the absorption axis direction of one of the linear polarization plates. In other words, in this region, the liquid crystal molecules are aligned in the absorption axis direction of one of the linear polarization plates. Therefore, even when a sufficient potential difference (transverse electric field) for transmitting light is generated in this region, light is not transmitted in the region.

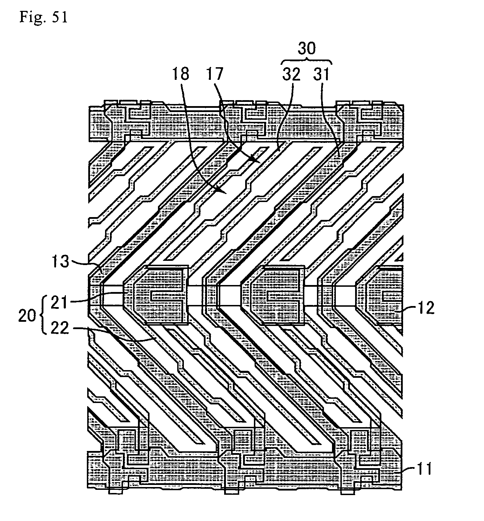

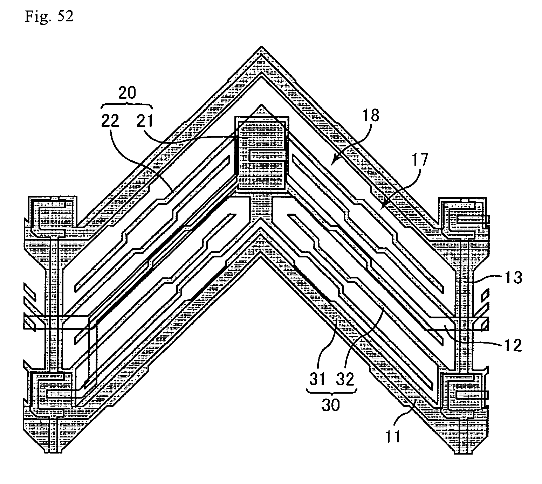

An embodiment shown in Figs. 51 and 52 may be employed favorably as an embodiment for suppressing transmittance loss caused by the trunk portion 21 and the trunk portion 31.

In the embodiment shown in Fig. 51, the source bus line 13 is bent into a V-shaped zigzag, and a part of the common electrode 30 above the source bus line 13 is likewise bent into a V-shaped zigzag.

More specifically, the source bus line 13 has a planar shape formed by coupling a part extending in the 225° direction to a part extending in the 315° direction. The gate bus line 11 and the Cs bus line 12, meanwhile, are formed rectilinearly in the left-right direction.

Further, a part of the trunk portion 31 that overlaps the source bus line 13 when seen from above is bent into a zigzag in the 225° direction and the 315° direction, similarly to the source bus line 13.

The branch portions 32 of the common electrode 30 are connected to a part of the trunk portion 31 that overlaps the gate bus line 11 when seen from above. Further, the branch portions 32 extend toward the center of the dot from the top and bottom of the dot, or more specifically extend in the 135° direction or the 225° direction from parts of the trunk portion 31 positioned at the top and bottom of the dot.

Further, the trunk portion 21 is provided in island form in the center of the dot. The branch portions 22 of the pixel electrode 20 extend toward the top and bottom of the dot from the center of the dot, or more specifically extend in the 45° direction or the 315° direction from the trunk portion 21.

According to this embodiment, the electric field generated by the branch portions 22 and the part of the trunk portion 31 that overlaps the source bus line 13 when seen from above is set in a substantially 45° direction relative to the absorption axis direction of the pair of linear polarization plates. In other words, the liquid crystal molecules are aligned diagonally relative to the absorption axis direction of the pair of linear polarization plates even in the region sandwiched between the part of the trunk portion 31 that overlaps the source bus line 13 when seen from above and the branch portions 22. Hence, light can also be transmitted in this region, enabling an improvement in the transmittance.

Alternatively, as shown in Fig. 52, the gate bus line 11 and the Cs bus line 12 may be bent instead of the source bus line 13.

In other words, the gate bus line 11 and Cs bus line 12 may be bent into a V-shaped zigzag, and a part of the common electrode 30 on the gate bus line 11 may be likewise bent into a V-shaped zigzag.

More specifically, the gate bus line 11 and the Cs bus line 12 respectively take a planar shape formed by coupling a part extending in the 45° direction to a part extending in the 315° direction. The source bus line 13, meanwhile, is formed rectilinearly in the up-down direction.

Further, a part of the trunk portion 31 that overlaps the gate bus line 11 when seen from above is bent into a zigzag in the 45° direction and the 315° direction, similarly to the gate bus line 11.

The branch portions 32 are connected to the part of the trunk portion 31 that overlaps the source bus line 13 when seen from above. Further, the branch portions 32 extend toward the center of the dot from the left and right of the dot, or more specifically extend in the 45° direction or the 135° direction from parts of the trunk portion 31 positioned on the left and right of the dot.

Further, the trunk portion 21 is provided in island form in the center of the dot. The branch portions 22 extend toward the left and right of the dot from the center of the dot, or more specifically extend in the 225° direction or the 315° direction from the trunk portion 21.

According to this embodiment, the electric field generated by the branch portions 22 and the part of the trunk portion 31 that overlaps the gate bus line 11 when seen from above is set in a substantially 45° direction relative to the absorption axis direction of the pair of linear polarization plates. In other words, the liquid crystal molecules are aligned diagonally relative to the absorption axis direction of the pair of linear polarization plates even in the region sandwiched between the part of the trunk portion 31 that overlaps the gate bus line 11 when seen from above and the branch portions 22. Hence, light can also be transmitted in this region.

According to the embodiments shown in Figs. 51 and 52, described above, a reduction in transmittance caused by the trunk portion 21 and the trunk portion 31 can be suppressed effectively.

Needless to say, in all embodiments, the narrow interval region 17 and wide interval region 18 are provided in the dot. Further, the electrode interval S is varied in stepped fashion along the extension direction of the branch portions 22 and the branch portions 32.

More specifically, large and small intervals, or in other words the two regions 17 and 18, are formed alternately from a tip end region of the branch portion 22 or the branch portion 32 toward a root portion of the branch portion 22 or the branch portion 32 while keeping a sum of the electrode interval S in the narrow interval region 17 and the electrode interval S in the wide interval region 18 constant.

Hence, according to these embodiments also, a plurality of regions having different electrode intervals S can be formed effectively in a single dot. As a result, the white tinge phenomenon can be suppressed effectively.

The present invention was described in detail above using the first and second embodiments. According to the present invention, however, the number of regions having different electrode intervals is not limited to two and may be set at three or more.

Further, when the present invention is applied to a color liquid crystal display device, the electrode intervals between the dots of the respective colors may be identical or different. In the latter case, the electrode intervals in the dots of the respective colors may be optimized in accordance with the characteristics of light in specific colors (specific wavelengths) passing through the dots of the respective colors.

### (Second comparative embodiment)

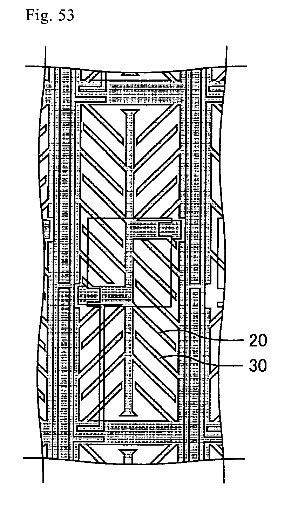

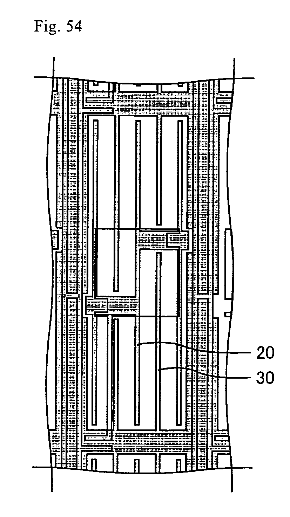

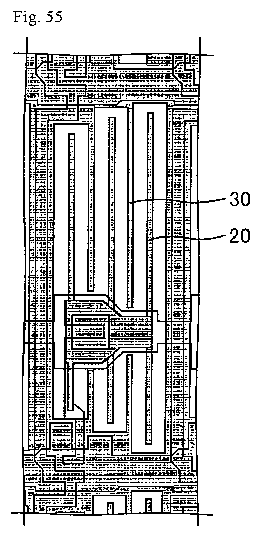

Figs. 53 to 55 are planar pattern diagrams showing a liquid crystal display device according to a second comparative embodiment. As shown in Figs. 53 to 55, the liquid crystal display device according to this comparative embodiment includes the comb-shaped pixel electrode 20 and common electrode 30, similarly to the first embodiment, but the electrode interval is standardized throughout the dot, and therefore white tinge is perceived clearly.

### (Second embodiment)

A liquid crystal display device according to this embodiment differs from the first embodiment as follows.
The liquid crystal display device according to this embodiment includes a counter electrode on the opposed substrate 2 side. More specifically, as shown in Fig. 57, a counter electrode 61, a dielectric layer (an insulating layer) 62, and a vertical alignment layer 51 are laminated in that order onto the liquid crystal layer side main surface of the insulating substrate 40. Note that the color layers 42 and/or the BM layer 41 and so on may be provided between the counter electrode 61 and the insulating substrate 40.

The counter electrode 61 is formed from a transparent conductive film made of ITO, IZO, or the like. The counter electrode 61 and the dielectric layer 62 are respectively formed seamlessly to cover at least the entire display region. A predetermined potential common to each pixel (dot) is applied to the counter electrode 61.

The dielectric layer 62 is formed from a transparent insulating material. More specifically, the dielectric layer 62 is formed from an inorganic insulation film made of silicon nitride or the like, or an organic insulation film made of acrylic resin or the like.

Meanwhile, a pair of comb-shaped electrodes including the pixel electrode 20 and the common electrode 30 are provided on the insulating substrate 10, similarly to the first embodiment, and a vertical alignment layer 52 is further provided thereon. The linear polarization plates 6, 7 are disposed on outer main surfaces of the two insulating substrates 10, 40.

Except during black display, different voltages are applied between the pixel electrode 20, and the common electrode 30 and counter electrode 61. The common electrode group 30 and the counter electrode 61 may be grounded, and voltages of identical magnitudes and polarities or different magnitudes and polarities may be applied to the common electrode 30 and the counter electrode 61.

With the liquid crystal display device according to this embodiment, similarly to the first embodiment, the white tinge phenomenon can be reduced. Further, by forming the counter electrode 61, the response time can be shortened.

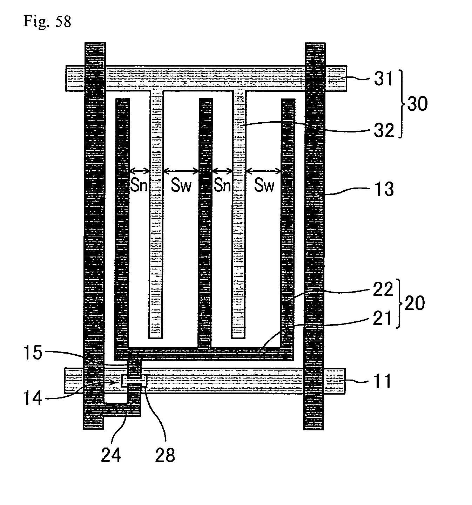

Fig. 58 shows another specific example of a pixel constitution according to the first and second embodiments. Note that the pixel shown in Fig. 58 may be constituted by dots (sub-pixels) in a plurality of colors, and in this case, the following constitution corresponds to a dot.

The source bus line 13, the gate bus line 11, the thin film transistor (TFT) 14 serving as a switching element (an active element) provided for each pixel, the pixel electrode 20 provided individually for each pixel, and the common electrode 30 provided in common to a plurality of pixels (all of the pixels, for example) are provided on the liquid crystal layer 3 side main surface of the insulating substrate 10.

The gate bus line 11 and common electrode 30 are provided on the insulating substrate 10, a gate insulator (not shown) is provided on the gate bus line 11 and the common electrode 30, the source bus line 13 and pixel electrode 20 are provided on the gate insulator, and the vertical alignment layer 52 is provided on the source bus line 13 and the pixel electrode 20.

Note that the common electrode 30 and the pixel electrodes 20 may be disposed on a single layer (a single insulation film) by patterning a single film in a single process using a photolithography method.

The source bus lines 13 are provided parallel to each other in a rectilinear shape so as to extend between adjacent pixels in the up-down direction. The gate bus lines 11 are provided parallel to each other in a rectilinear shape so as to extend between adjacent pixels in the left-right direction. The source bus lines 13 and the gate bus lines 11 are orthogonal to each other such that a region defined by the source bus lines 13 and the gate bus lines 11 substantially constitutes a single pixel region. The gate bus line 11 also functions as a gate of the TFT 14 in the display region.

The TFT 14 is provided near an intersection portion between the source bus line 13 and the gate bus line 11, and includes a semiconductor layer 28 formed in island form on the gate bus line 11. The TFT 14 also includes a source electrode 24 serving as a source and a drain wiring 15 serving as a drain. The source electrode 24 connects the TFT 14 to the source bus lines 13, and the drain wiring 15 connects the TFT 14 to the pixel electrode 20. The source electrode 24 and the source bus line 13 are patterned from a single film and thereby connected. The drain wiring 15 and the pixel electrode 20 are patterned from a single film and thereby connected.

An image signal is supplied to the pixel electrode 20 from the source bus line 13 at a predetermined timing while the TFT 14 is switched ON. Meanwhile, a predetermined potential common to each pixel is applied to the common electrode 30.

The pixel electrode 20 takes a comb-shaped planar form, and includes a rectilinear trunk portion (pixel trunk portion) 21 and a plurality of rectilinear comb teeth (branch portions 22). The trunk portion 21 is provided along a short side (a lower side) of the pixel. The branch portions 22 are connected to the trunk portion 21 and thereby connected to each other. Further, the branch portions 22 extend from the trunk portion 21 toward an opposing short side (an upper side), or in other words in a substantially 90° direction.

The common electrode 30 takes a comb-shaped planar form, and includes a rectilinear trunk portion (common trunk portion) 31 and a plurality of rectilinear comb teeth (branch portions 32). The branch portions 32 and the trunk portion 31 are patterned from a single film and thereby connected. The trunk portion 31 is provided in a rectilinear shape parallel to the gate bus line 11, and extends between adjacent pixels in the left-right direction. The branch portions 32 extend from the trunk portion 31 toward the opposing lower side of the pixel, or in other words in a substantially 270° direction.

Hence, the pixel electrode 20 and the common electrode 30 are disposed opposite each other such that the respective comb teeth thereof (the branch portions 22 and the branch portions 32) intermesh. Further, the branch portions 22 and the branch portions 32 are disposed parallel to each other and alternately via intervals.

In the example shown in Fig. 58, two domains in which the tilt directions of the liquid crystal molecules are oppositely oriented are formed in a single pixel. The number of domains is not especially limited and may be set appropriately, but to obtain a favorable viewing angle characteristic, four domains may be formed in a single pixel.

Further, in the example shown in Fig. 58, two or more regions having different electrode intervals are provided in a single pixel. More specifically, a region having a relatively narrow electrode interval (a region having an interval Sn) and a region having a relatively wide electrode interval (a region having an interval Sw) are formed in each pixel. Therefore, similarly to the first embodiment, the white tinge phenomenon can be reduced.

The present application claims priority to Patent Application No. 2009-129521 filed in Japan on May 28, 2009 and Patent Application No. 2010-6693 filed in Japan on January 15, 2010 under the Paris Convention and provisions of national law in a designated State, the entire contents of which are hereby incorporated by reference.

### EXPLANATION OF REFERENCE NUMERALS

- 100:: liquid crystal display panel
- 1:: active matrix substrate (TFT array substrate)
- 2:: opposed substrate
- 3:: liquid crystal layer
- 4, 4a, 4b:: liquid crystal molecule
- 5:: transverse electric field
- 6, 7:: linear polarization plate
- 6a, 7a:: absorption axis
- 10:: insulating substrate
- 11:: gate bus line
- 12:: Cs bus line
- 13:: source bus line
- 14:: TFT
- 15:: drain wiring
- 16:: gate
- 17:: narrow interval region
- 18:: wide interval region
- 19:: contact hole
- 20:: pixel electrode
- 21:: trunk portion (pixel trunk portion)
- 22:: branch portion (pixel branch portion)
- 24:: source electrode
- 28:: semiconductor layer
- 30:: common electrode
- 31:: trunk portion (common trunk portion)
- 32:: branch portion (pixel branch portion)
- 40:: insulating substrate
- 41:: BM layer
- 42:: color layer
- 43:: overcoat layer
- 51, 52:: vertical alignment layer
- 61:: counter electrode
- 62:: dielectric layer

## Claims

1. A liquid crystal display device comprising a pair of substrates disposed opposite each other, and a liquid crystal layer sandwiched between the pair of substrates,
wherein one of the pair of substrates includes a pair of comb-shaped electrodes,
the pair of electrodes are disposed opposite each other planarly within a pixel,
the liquid crystal layer contains p-type nematic liquid crystal and is driven by an electric field generated between the pair of electrodes,
the p-type nematic liquid crystal is vertically aligned relative to surfaces of the pair of substrates when no voltage is applied, and
two or more regions differing from each other in an interval between the pair of electrodes are formed within the pixel.

2. The liquid crystal display device according to claim 1, wherein the liquid crystal display device includes two regions differing from each other in the interval, and
when a surface area of a region, of the two regions, in which the interval is narrower is set as Aₙ, and a surface area of a region, of the two regions, in which the interval is wider is set as A_{w}, the liquid crystal display device satisfies Aₙ ≤ A_{w}.

3. The liquid crystal display device according to claim 2, wherein the liquid crystal display device satisfies Aₙ : A_{w} = 1 : 1 to 1 : 3.

4. The liquid crystal display device according to claim 3, wherein the liquid crystal display device satisfies Aₙ : A_{w} = 1 : 1.5 to 1 : 3.

5. The liquid crystal display device according to claim 4, wherein the liquid crystal display device substantially satisfies Aₙ : A_{w} = 1 : 2.
